(19) Europäisches Patentamt / European Patent Office / Office européen des brevets

(11) **EP 4 177 226 B1**

(12) **EUROPÄISCHE PATENTSCHRIFT**

(45) Veröffentlichungstag und Bekanntmachung des Hinweises auf die Patenterteilung:
**24.04.2024 Patentblatt 2024/17**

(21) Anmeldenummer: **22205149.2**

(22) Anmeldetag: **02.11.2022**

(51) Internationale Patentklassifikation (IPC):
**C03C 10/00** (2006.01)   **C03C 17/00** (2006.01)

(52) Gemeinsame Patentklassifikation (CPC):
**C03C 10/0027; C03C 17/00**

(54) **ABDECKVORRICHTUNG MIT DEAD-FRONT-EFFEKT**

COVER DEVICE WITH DEAD FRONT EFFECT

DISPOSITIF DE RECOUVREMENT AVEC EFFET FRONTAL DEAD

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **04.11.2021 DE 102021128736**

(43) Veröffentlichungstag der Anmeldung:
**10.05.2023 Patentblatt 2023/19**

(73) Patentinhaber: **SCHOTT AG**
**55122 Mainz (DE)**

(72) Erfinder:
• **SPIER, Martin**
**55457 Horrweiler (DE)**
• **LANGER, Philipp**
**67577 Alsheim (DE)**
• **ZENKER, Thomas**
**55268 Nieder-Olm (DE)**
• **HEINRICH, Silke**
**65207 Wiesbaden (DE)**
• **HENN, Christian**
**55546 Frei-Laubersheim (DE)**

(74) Vertreter: **Blumbach · Zinngrebe Patentanwälte PartG mbB**
**Alexandrastraße 5**
**65187 Wiesbaden (DE)**

(56) Entgegenhaltungen:
EP-A1- 3 339 741       EP-B1- 3 309 461
EP-B1- 3 502 071       DE-A1-102008 050 263
DE-A1-102018 110 910   DE-U1-202018 102 534
US-B2- 10 184 655

**Beschreibung**

Die Erfindung betrifft im Allgemeinen eine Abdeckvorrichtung mit einer Anzeigeeinrichtung. Im Speziellen betrifft die Erfindung eine Anzeigevorrichtung umfassend eine Abdeckvorrichtung mit einer optischen Anzeigeeinrichtung, wobei die Abdeckvorrichtung einen sog. Dead-Front- Effekt aufweist, so dass die Anzeigeeinrichtung im ausgeschalteten Zustand optisch unauffällig ist.

Unter einem Dead-Front-Effekt wird der Effekt bezeichnet, durch welchen punktuelle oder flächige Helligkeitsunterschiede im Anzeigenbereich und insbesondere Unterschiede zwischen dem Anzeigebereich und weiteren, den Anzeigebereich umgebenden Flächen der Abdeckplatte, beispielsweise eines Kochfeldes, für einen Benutzer von außen nicht sichtbar sind und bei welcher vorzugsweise auch kein farblicher Unterschied erkennbar ist. Dieser Dead-Front-Effekt sorgt somit zum einen für ein homogenes Erscheinungsbild der Abdeckplatte wenn die Anzeigeeinrichtung ausgeschaltet ist, welches eine attraktive Anmutung unterstützt und es ermöglicht, das optische Erscheinungsbild der Abdeckplatte harmonisch in das jeweilige Designkonzept einzupassen. Weiterhin kann durch den Dead-Front-Effekt, d.h. die optische Unauffälligkeit der Leuchtanzeigen im ausgeschalteten Zustand, zu einer Erhöhung der Betriebssicherheit und der Bedienfreundlichkeit des betreffenden Haushaltsgerätes führen. So weisen die Bedienfelder von Haushaltsgeräten zunehmend eine große Anzahl unterschiedlicher Leuchtanzeigen für verschiedene Informationen und Funktionen auf, welche unter der Abdeckplatte angeordnet sind. Sind diese Anzeigen auch im ausgeschalteten Zustand deutlich sichtbar, so kann dies zu einem unübersichtlichen Bedienfeld und somit zu einem erhöhten Risiko von Fehlbedienungen führen. Somit kann durch den Dead-Front-Effekt nicht nur das Design, sondern auch die Bedienfreundlichkeit und Betriebssicherheit des betreffenden Haushaltgerätes verbessert werden.

Insbesondere bei Kochfeldern aus Glaskeramik werden zunehmend farbige Anzeigen sowohl aus designtechnischen Gründen als auch zur übersichtlichen Visualisierung verschiedener Funktionen wie beispielsweise einer Resthitzeanzeige oder einer Benutzerführung zur Vereinfachung der Bedienung verwendet. In der DE 10 2008 050 263 A1 der Anmelderin werden volumengefärbte Glaskeramiken beschrieben, die auf Grund des Transmissionsverlaufs eine gegenüber den davor bekannten volumengefärbten Glaskeramiken bereits eine verbesserte Anzeigenfähigkeit von farbigen Leuchtmitteln, insbesondere auch von blauen oder grünen Leuchtmitteln aufweisen. Gleichzeitig weisen diese Glaskeramiken eine integrale spektrale Transmission Y über den gesamten sichtbaren Bereich von weniger als 2,5% auf.

Aus dem Stand der Technik sind unterschiedliche Möglichkeiten bekannt, den Zielkonflikt zwischen einem relativ geringen Lichttransmissionsgrad (gemäß der DIN EN 410) zur Reduzierung des Durch- bzw. Einblicks auf die Einbauten unter der Glaskeramik und somit zur Gewährleistung eines Dead-Front- Effekts und einem möglichst hohen Lichttransmissionsgrad für die Darstellung heller Leuchtanzeigen zu lösen.

Eine Möglichkeit besteht darin, als Abdeckplatte eine volumengefärbte Glaskeramik zu verwenden, welche durch ihre Zusammensetzung einen höheren spektralen Transmissionsgrad im sichtbaren Spektrum aufweist und diese partiell mit einer Vorrichtung zur Verringerung des Transmissionsgrades zu versehen. Hierbei werden zumeist die Bereiche der Abdeckplatte, welche Leuchtanzeigen aufweisen, ausgespart.

Die internationale Patentanmeldung WO 2012/001300 A1 offenbart eine Garvorrichtung, bei welcher interne Einrichtungen wenigstens eine Heizvorrichtung, eine Steuer- und/oder Überwachungseinrichtung, und wenigstens eine Licht emittierende Einrichtung umfassen. Diese internen Einrichtungen sind mit einer Glas-oder glaskeramischen Platte abgedeckt, welche unter Verwendung von Vanadiumoxid gefärbt ist. Die Glas- oder glaskeramische Platte weist eine intrinsische Lichttransmission von 2,3% bis 40% und eine Transmission von wenigstens 0,6% für mindestens eine Wellenlänge im Bereich von 420nm bis 480nm auf. Bei dieser Garvorrichtung ist mindestens eine Maskierung zum Maskieren wenigstens eines Bereichs der internen Elemente oberhalb, unterhalb oder innerhalb der Glas- oder glaskeramischen Platte vorgesehen.

Das deutsche Gebrauchsmuster DE 202010018044 U1 beschreibt eine Anzeigeanordnung, die einerseits eine Glaskeramikplatte vom Typ Lithium-Aluminosilikat, deren optische Transmission bei einer Dicke von 4 mm zwischen 0,2% und 4% bei wenigstens einer Wellenlänge im Bereich zwischen 400 nm und 500 nm liegt, sowie andererseits eine Leuchtvorrichtung, wobei die Leuchtvorrichtung wenigstens eine polychromatische Lichtquelle, die wenigstens eine erste Emission mit einer Intensität ungleich null mit der Wellenlänge zwischen 400 nm und 500 nm und wenigstens eine zweite Emission mit einer Wellenlänge von mehr als 500 nm aufweist, umfasst, bei welcher die Positionierung der Quelle dazu ausgelegt ist, ein Anzeigen durch die Glaskeramikplatte zu ermöglichen.

Dem deutschen Gebrauchsmuster DE 202012012718 U1 ist ein Artikel zu entnehmen, der wenigstens einen farbigen Leuchtbereich, insbesondere Anzeigebereich, aufweist, wobei der Artikel wenigstens ein Glaskeramiksubstrat, das eine Lichtdurchlässigkeit von 0,8% bis 40% sowie eine optische Transmission von wenigstens 0,1% für wenigstens eine Wellenlänge im Bereich zwischen 420 nm und 780 nm aufweist, wenigstens eine Lichtquelle sowie wenigstens einen Filter umfasst, um wenigstens einen farbigen Leucht-, insbesondere Anzeigebereich in wenigstens einem Bereich der Platte auszubilden.

Jedoch zeigen volumengefärbte Glaskeramiken, insbesondere vanadiumhaltige Glaskeramiken, im sichtbaren Spektralbereich ein sehr inhomogenes Spektrum. So ist die Transmission für langwellige Strahlung, d.h. IR-Strahlung und rotes Licht verhältnismäßig hoch, für grünes oder blaues Licht dagegen relativ niedrig.

Eine weitere Möglichkeit, Abdeckvorrichtungen mit einem guten Dead-Front-Effekt und einer gleichzeitig hohen Anzeigefähigkeit für farbige Leuchtanzeigen unabhängig von der jeweiligen Wellenlänge des emittierten Lichts zu erhalten, besteht darin, als Abdeckplatten transparente Glaskeramiken, beispielsweise Glaskeramiken vom Typ CERAN CLEARTRANS® der Anmelderin, in Kombination mit einer opaken Unterseitenbeschichtung und einem Transmissionsfilter zu verwenden. Die Unterseitenbeschichtung ist hierbei auf der betrieblichen Rückseite der Glaskeramik aufgebracht und opak. Je nach gewünschtem Farbton bzw. Erscheinungsbild der Abdeckplatte kann die Unterseitenbeschichtung unterschiedliche Pigmente und/oder Farbstoffe enthalten. Bereiche der Abdeckplatte, welche eine Anzeigefähigkeit aufweisen sollen, werden hierbei nicht mit der Unterseitenbeschichtung versehen. Die Unterseitenbeschichtung stellt somit eine Maskierung dar. Um eine Auf- bzw. Durchsicht an den Anzeigebereichen zu verhindern und somit einen Dead-Front-Effekt zu gewährleisten, weisen diese Bereiche einen Transmissionsfilter auf. Der Transmissionsfilter senkt hierbei die Lichttransmission, so dass das darunter angebrachte Leuchtmittel nicht sichtbar ist.

Das Dokument EP 3 339 741 A1 beschreibt Abdeckvorrichtungen für Haushaltsgeräte, die eine Glaskeramik, ein Leuchtmittel und ein Mittel zur Reduktion des Lichttransmissionsgrades enthalten.

Auf Grund der hohen Transparenz der Glaskeramik müssen jedoch Unterseitenbeschichtung und Transmissionsfilter bezüglich des Erscheinungsbildes, insbesondere bezüglich ihrer Farbe in Aufsicht aneinander angepasst werden. Weichen Unterseitenbeschichtung und Transmissionsfilter im Farbton zu sehr voneinander ab, so ist dies optisch auffällig und stört den harmonischen optischen Gesamteindruck. Die farbliche Abstimmung des Transmissionsfilters auf die Unterseitenbeschichtung begrenzt hierbei die Auswahl der jeweils möglichen Transmissionsfilter.

Ein weiterer Nachteil bei der Verwendung von transparenten Glaskeramiken als Abdeckplatte besteht darin, dass sowohl die Unterseitenbeschichtung als auch der Transmissionsfilter auch bei hohen Betriebstemperaturen, wie sie bei Verwendung als Kochfeld zwangsweise auftreten, farbstabil sein müssen.

### Aufgabe der Erfindung

Es ist daher Aufgabe der Erfindung, eine Abdeckvorrichtung bereit zu stellen, welche die vorstehend beschriebenen Nachteile nicht aufweist und neben einer hohen Anzeigefähigkeit für farbige Leuchtquellen einen guten Dead-Front-Effekt zeigt.

### Beschreibung der Erfindung

Die der Erfindung zu Grunde liegende Aufgabe wird in überraschender Weise bereits durch den Gegenstand des unabhängigen Anspruchs gelöst. Vorteilhafte Ausführungsformen und Weiterbildung der Erfindung sind Gegenstand der Unteransprüche.

Die Erfindung betrifft eine Abdeckvorrichtung für ein Haushaltsgerät mit einer betrieblichen Vorder- und Rückseite. Die Abdeckvorrichtung kann insbesondere als Abdeckplatte ausgebildet oder plattenförmig sein. Unter der betrieblichen Rückseite wird dabei die Oberfläche der Gerätekomponente verstanden, welche in den Geräteinnenraum zeigt. Entsprechend wird unter der betrieblichen Vorderseite die Oberfläche der Gerätekomponente verstanden, die zum Anwender zeigt.

Die Abdeckvorrichtung weist hierbei zumindest ein Leuchtmittel sowie eine transparente, volumengefärbte Glaskeramik, auf, wobei das Leuchtmittel auf der betrieblichen Rückseite der Abdeckvorrichtung angeordnet ist. Die Glaskeramik weist bezogen auf eine Dicke von 4 mm einen Lichttransmissionsgrad $\tau_{vis}$ für den sichtbaren Spektralbereich, d.h. eine Lichttransmission im VIS-Bereich gemäß DIN 5033, im Bereich von 0,5 bis 70% auf. Unter dem VIS-Bereich wird vorliegend der Wellenlängenbereich von 380 nm bis 780 nm verstanden. Die Lichttransmission im VIS-Bereich ist hierbei eine integrale Lichttransmission und entspricht dem Y-Wert des CIExyY (1932, 2°) Farbraums, auch als "brightness" bezeichnet. Die Begriffe Lichttransmission im VIS-Bereich (gemäß DIN 5033), Lichttransmissionsgrad (gemäß DIN EN 410) und Brightness Y (gemäß CIExyY) sind also synonym zu verwenden, Auf Grund der erfindungsgemäßen geringeren Lichttransmission im VIS-Bereich der Glaskeramik erscheint die Vorrichtung in Aufsicht unabhängig vom verwendeten Farbmittel dunkel. Gleichzeitig ist eine Anzeigefähigkeit durch das Leuchtmittel gewährleistet. Unter der Anzeigefähigkeit wird insbesondere die Eigenschaft der Abdeckvorrichtung verstanden, dass das vom Leuchtmittel emittierte Licht durch einen Betrachter von der betrieblichen Vorderseite aus ohne weitere Hilfsmittel deutlich wahrgenommen werden kann.

Da es sich bei $\tau_{vis}$ um die integrale Lichttransmission über den gesamten VIS-Bereich handelt, kann die Lichttransmission in einzelnen Wellenlängenbereichen, also der spektrale Lichttransmissionsgrad, jedoch deutlich höher sein. Dies ist beispielsweise bei vanadiumhaltigen Glaskeramiken, welche einen inhomogenen Transmissionsverlauf innerhalb des sichtbaren Spektralbereichs aufweisen, der Fall. Ein entsprechend inhomogener Transmissionsverlauf kann somit dazu führen, dass die auf der betrieblichen Rückseite angebrachten Vorrichtungen trotz eines relativ geringen Transmissionsgrades $\tau_{vis}$ von der betrieblichen Vorderseite aus für einen Betrachter auch ohne Hilfsmittel sichtbar sind.

Daher ist zwischen dem Leuchtmittel und der Glaskeramik ein erstes Mittel zur Reduktion des Lichttransmissionsgrades, im Folgenden auch als Transmissionsfilter oder Mittel zur Transmissionsabsenkung bezeichnet, angeordnet. Der Transmissionsfilter verringert hierbei die Transmission in zumindest einem Teilbereich des VIS-Bereichs, so dass die Glaskeramik und der Transmissionsfilter zusammen einen Lichttransmissionsgrad im sichtbaren Bereich von 0,4% bis 15% aufweisen. Vorzugsweise liegt dieser Lichttransmissionsgrad im Bereich 0,5 - 10 %, besonders bevorzugt im Bereich 0,8 % bis 5 % oder sogar im Bereich 1 % bis 3 %. Der Lichttransmissionsgrad von Glaskeramik und Transmissionsfilter wird im Folgenden auch als integrale Lichttransmission oder integrale Gesamttransmission im VIS-Bereich oder auch als Gesamttransmission bezeichnet. Insbesondere gelten die oben genannten Transmissionswerte für Abdeckvorrichtungen, die eine Glaskeramikplatte mit einer Dicke im Bereich von 4 bis 6 mm aufweisen.

Zur Erreichung solcher Transmissionswerte wird der Fachmann Glaskeramiken und geeignete Mittel zur Transmissionsabsenkung anhand ihres jeweiligen Lichttransmissionsgrades auswählen. Allgemein kann es sich bei solchen Mitteln beispielsweise um eingefärbte oder farbig beschichtete Folien oder Platten oder Beschichtungen auf der Anzeige oder auf der Glaskeramik handeln. Folien oder Platten können beispielsweise angedrückt oder auf die Anzeige oder die Glaskeramik aufgeklebt werden. Beschichtungen können mit einer Vielzahl unterschiedlicher Verfahren entweder auf die Glaskeramik oder das Leuchtmittel aufgebracht werden, insbesondere mittels Tintenstrahl-, Sieb- oder Tampondruck oder mittels Sputtern. Die verschiedenen Möglichkeiten zur Ausgestaltung eines solchen Mittels werden im Folgenden noch ausführlicher erläutert.

Durch die geringe Gesamttransmission kann hierbei ein Dead-Front-Effekt erzielt werden, d.h. das Leuchtmittel ist im ausgeschalteten Zustand für einen durchschnittlichen Betrachter ohne weitere Hilfsmittel nicht oder nur kaum wahrnehmbar, so dass die Abdeckvorrichtung ein optisch homogenes Erscheinungsbild aufweist. Gleichzeitig ist das vom Leuchtmittel im angeschalteten Zustand emittierte Licht auf der betrieblichen Vorderseite der Abdeckvorrichtung gut wahrnehmbar, die Abdeckvorrichtung weist somit eine gute Anzeigefähigkeit auf.

Dies kann damit erklärt werden, dass beim Dead-Front-Effekt vorwiegend das Umgebungslicht, welches von der betrieblichen Vorderseite auf die Abdeckvorrichtung trifft, relevant ist. So sind die auf der betrieblichen Rückseite befindenden Vorrichtungen wie das Leuchtmittel nur dann für den Betrachter von der betrieblichen Vorderseite aus sichtbar, wenn das Umgebungslicht durch die Abdeckplatte zur entsprechenden Vorrichtung gelangt, an ihr reflektiert oder von ihr zurück gestreut wird und anschließend erneut durch die Abdeckplatte gelangt und an der betrieblichen Vorderseite austritt. Somit muss das Umgebungslicht die Abdeckplatte zweimal passieren. Das Licht des Leuchtmittels dagegen muss die Abdeckplatte lediglich nur einmal passieren, bevor es an der betrieblichen Vorderseite der Abdeckvorrichtung wieder austritt. Entsprechend wird die Sichtbarkeit der auf der betrieblichen Rückseite befindlichen Vorrichtungen bzw. der Dead-Front-Effekt durch niedrige Transmissionsgrade stärker beeinflusst als die Anzeigefähigkeit.

Die erfindungsgemäße Abdeckvorrichtung zeichnet sich weiterhin dadurch aus, dass das Transmissionsspektrum bzw. der spektrale Transmissionsverlauf der Glaskeramik, das Transmissionsspektrum des Transmissionsfilters sowie das Emissionsspektrum des Leuchtmittels so aufeinander abgestimmt sind, dass die x- und y-Farbkoordinaten im $CIE_{xy}$Y-Farbraum des vom Leuchtmittel emittierten Lichtes nach Durchtritt nur durch die volumengefärbte Glaskeramik und nach Durchtritt durch die volumengefärbte Glaskeramik und den Transmissionsfilter im Wesentlichen gleich sind. Mit anderen Worten werden die x- und y-Farbkoordinaten und somit der Farbort des vom Leuchtmittel emittierten Lichtes durch den Transmissionsfilter nicht beeinflusst.

Die Beeinflussung des Farbortes durch das erste Mittel zur Reduktion der Lichttransmission kann hierbei durch folgendes Verhältnis der x- und y-Farbkoordinaten des vom Leuchtmittel emittierten Lichtes im $CIE_{xy}$Y-Farbraum quantifiziert werden:

$$\sqrt{(x_1 \text{-} x_2)^2 + (y_1 \text{-} y_2)^2}$$

Hierbei sind $x_1$ und $y_1$ die Farbkoordinaten des vom Leuchtmittel emittierten Lichtes im CIExyY-Farbraum nach Durchtritt durch die volumengefärbte Glaskeramik. Die Koordinaten $x_2$ und $y_2$ beschreiben dagegen die x- und y-Farbkoordinaten des vom Leuchtmittel emittierten Lichtes im CIExyY-Farbraums nach dessen Durchtritt durch die volumengefärbte Glaskeramik und des ersten Mittels zur Reduktion des Lichttransmissionsgrades. Je kleiner der Wert der oben beschriebenen Beziehung der entsprechenden Farbkoordinaten ist, desto geringer ist die Beeinflussung des Farbortes durch das erste Mittel zur Reduktion der Lichttransmission. Für eine Ausführungsform der Erfindung gilt daher:

$$\sqrt{(x_1 \text{-} x_2)^2 + (y_1 \text{-} y_2)^2} < 0{,}05.$$

Gemäß einer bevorzugten Ausführungsform sind Transmissions- bzw. Emissionspektren von Glaskeramik, Transmissionsfilter und Leuchtmittel so aufeinander abgestimmt, dass für die oben beschriebene Beziehung gilt:

$$\sqrt{\left(x_1-x_2\right)^2 + \left(y_1-y_2\right)^2} < 0{,}04, \text{ bevorzugt} < 0{,}02$$

und besonders bevorzugt 0,01.

Die Glaskeramikplatte hat bevorzugt eine Dicke im Bereich von 3 bis 12 mm. Diese Dicke gewährleistet eine ausreichende Stabilität zur Verwendung als Abdeckplatte, ohne dass diese zu schwer wird. Als besonders vorteilhaft hat sich eine Dicke im Bereich von 4 bis 6 mm herausgestellt. Eine bevorzugte Ausführungsform sieht vor, dass die Glaskeramik, bezogen auf eine Dicke von 4 mm, einen integrale Lichttransmissionsgrad $\tau_{vis}$ im VIS-Bereich wenigstens 1%, bevorzugt wenigstens 2%, besonders bevorzugt von wenigstens 3% und/oder höchstens 50%, bevorzugt höchstens 40% und besonders bevorzugt höchstens 5% aufweist. Als besonders vorteilhaft haben sich hierbei entsprechende Transmissionsgrade $\tau_{vis}$ im Bereich von 1 bis 50%, bevorzugt 2 bis 50%, und besonders bevorzugt 3 bis 40% herausgestellt. Niedrige Transmissionsgrade $\tau_{vis}$ im Bereich von 0,5 bis 3 %, vorzugsweise im Bereich von 1 bis 2% oder mittlere Transmissionsgrade $\tau_{vis}$ im Bereich von 2,5 bis 10%, vorzugsweise im Bereich von 3 bis 5 %, sind hierbei besonders vorteilhaft in Hinblick auf den Dead-Front-Effekt sowie die Anzeigefähigkeit farbiger Leuchtanzeigen, beispielsweise in Form von LEDs. Bei der Verwendung von Glaskeramiken mit höheren Transmissionsgarden $\tau_{vis}$ im sichtbaren Bereich, insbesondere mit einem Transmissionsgrad im Bereich von 15 bis 40%, vorzugsweise 20 bis 35% und besonders bevorzugt 23 bis 33%, können dagegen zusätzlich zum erfindungsgemäßen Leuchtmittel Displays in die Abdeckvorrichtung integrient werden.

Gemäß einer Weiterbildung der Erfindung ist die Glaskeramik, abgesehen von unvermeidlichen Spuren im Bereich von bis zu 500 ppm, frei von Arsen und Antimon. Weiterhin weist die Glaskeramik vorzugsweise $V_2O_5$ als färbende Komponente auf. Insbesondere weist die Glaskeramik einen $V_2O_5$-Gehalt im Bereich von 0,001 bis 0,06 Gew.-% und/oder ein Verhältnis von $V_2O_5$ zu $Fe_2O_3$ im Bereich von 0,125 bis 1 auf. Entsprechende Glaskeramiken zeigen hierbei ein Transmissionsspektrum, welches relativ hohe Transmissionswerte auch für den blauen und grünen Spektralbereich aufweisen.

Insbesondere Glaskeramiken mit der vorstehenden Zusammensetzung weisen hierbei Transmissionswerte $\tau_{vis}$ im Bereich von 2,5 bis 4,5 %, bevorzugt von 3 bis 4,5 % auf. Glaskeramiken mit entsprechenden $\tau_{vis}$ weisen eine besonders gute Anzeigefähigkeit auf. Durch den erfindungsgemäßen Transmissionsfilter kann weiterhin die Gesamttransmission der Abdeckplatte soweit verringert werden, dass ein guter Dead-Front-Effekt gewährleistet ist.

Der Transmissionsfilter bzw. das erste Mittel zur Reduktion des Lichttransmissionsgrades ist vorzugsweise auf der betrieblichen Rückseite zwischen der Glaskeramik und dem Leuchtmittel aufgebracht.

Gemäß einer bevorzugten Ausführungsform ist der Transmissionsfilter in Form einer Beschichtung aufgebracht. Hierbei kann die Beschichtung entweder unmittelbar auf der Glaskeramikplatte oder auf einem Träger, beispielsweise einer Folie oder einer Platte, aufgebracht werden. Der Träger mit der Beschichtung kann hierbei mit der Oberfläche der Glaskeramik und/oder mit der Oberfläche des Leuchtmittels in Kontakt stehen. Eine andere Ausführungsform sieht vor, dass der Träger sowohl zur Oberfläche der Glaskeramik als auch zur Oberfläche des Leuchtmittels beabstandet ist.

Die Beschichtung kann insbesondere mit Hilfe von Druckverfahren wie beispielsweise Siebdruck oder Tintenstrahldruck auf die Glaskeramik oder den mittelbaren Träger aufgebracht werden. Alternativ kann die Beschichtung beispielsweise mit Hilfe von Gasphasenabscheidungsverfahren, insbesondere mittels Sputtern, aufgebracht werden.

Eine andere Ausbildungsform sieht vor, dass der Transmissionsfilter als volumengefärbte Folie oder volumengefärbte Platte ausgebildet ist. Als besonders vorteilhaft haben sich hierbei Transmissionsfilter in Form einer volumengefärbten Folie oder Platte aus Glas oder Kunststoff herausgestellt. Der Transmissionsfilter kann hierbei mit den Oberflächen von Glaskeramik und/oder Leuchtmittel in Kontakt stehen oder von diesen räumlich beabstandet sein.

Gemäß einer bevorzugten Weiterbildung der Erfindung weist die Abdeckvorrichtung zusätzlich ein zweites Mittel zur Reduktion des Transmissionsgrades $\tau_{vis}$ auf. Das zweite Mittel zur Reduktion des Transmissionsgrades $\tau_{vis}$ ist als Beschichtung ausgebildet und auf der betrieblichen Rückseite, d.h. der Unterseite der Glaskeramikplatte angeordnet. Hierbei kann das zweite Mittel zur Reduktion des Transmissionsgrades gemäß einer bevorzugten Ausführungsform auf der Unterseite der Glaskeramik abgeschieden sein. In diesem Fall wird das zweite Mittel zur Reduktion des Transmissionsgrades auch als Unterseitenbeschichtung bezeichnet. Alternativ kann die Unterseitenbeschichtung auf einem Träger, insbesondere einer Folie oder Platte, aufgebracht werden.

Die Unterseitenbeschichtung kann insbesondere als Sol-Gel-basierte Beschichtung, als Beschichtung umfassend Polysiloxane, vorzugsweise Silikonharze oder als keramische Beschichtung ausgebildet sein. Alternativ kann es sich bei der Unterseitenbeschichtung auch um eine gesputterte Beschichtung handeln. Sol-Gel-basierte Beschichtungen und keramische Beschichtungen sind hierbei auf Grund ihrer hohen Temperaturstabilität besonders geeignet für Abdeckvorrichtungen, die hohen Betriebstemperaturen ausgesetzt sind, wie beispielsweise strahlungsbeheizten Kochfeldern.

Eine weitere Ausführungsform sieht vor, dass das zweite Mittel zur Reduktion des Lichttransmissionsgrades eine volumengefärbte Platte oder eine volumengefärbte Folie ist.

Das zweite Mittel zur Reduktion des Transmissionsgrades $\tau_{vis}$ und Glaskeramikplatte weisen zusammen einen Transmissionsgrad $\tau_{vis}$ von weniger als 3,5%, bevorzugt von weniger als 0,5% und besonders bevorzugt von weniger als 0,1% auf. Gemäß einer weiter bevorzugten Ausführungsform weisen das zweite Mittel zur Reduktion des Transmissionsgrades $\tau_{vis}$ und Glaskeramik zusammen einen Transmissionsgrad von weniger als 0,05% oder sogar weniger als 0,001% auf. Der Lichttransmissionsgrad des zweiten Mittels zur Reduktion der Lichttransmission ist vorzugsweise< 0,5%, bevorzugt < 0,05% und besonders bevorzugt < 0,005%. Ebenso ist es möglich, die Transmission des zweiten Mittels und der Glaskeramik auf praktisch 0 % zu reduzieren, indem ein entsprechendes Mittel verwendet wird, beispielsweise eine 1 mm Platte aus Aluminium.

Bei einem solchen zweiten Mittel zur Reduktion des Lichttransmissionsgrades kann es sich beispielsweise um eine Beschichtung auf der Glaskeramikplatte, eine Folie oder eine Platte handeln. Bei Beschichtungen kann es sich beispielsweise um pigmentierte und/oder mittels Farbstoffen eingefärbte Sol-Gel-Schichten, Silikonschichten, Silikonharz-Schichten, Emaille-Schichten, mittels Sputtern oder CVD-Verfahren hergestellte Schichten handeln. Folien und Platten können auf die Glaskeramik aufgeklebt, an diese angedrückt oder lose angeordnet sein. Bei Folien kann es sich um eingefärbte oder mittels einer farbigen Beschichtung versehene Kunststofffolien oder Folien aus flexiblem Dünnglas handeln. Platten können beispielsweise aus Glas, Glaskeramik, Glimmer, Metall, insbesondere Stahl oder Aluminium bestehen und ebenfalls Beschichtungen aufweisen. Platten können auch in Form von Blechen vorliegen.

Um dennoch eine Anzeigefähigkeit der Abdeckplatte zu gewährleisten, sind nur Teilbereiche der Abdeckvorrichtung mit dem zweiten Mittel zur Reduktion des Transmissionsgrades $\tau_{vis}$ versehen. So weist das zweite Mittel zur Reduktion des Transmissionsgrades $\tau_{vis}$ insbesondere an den Stellen der Abdeckvorrichtung, an denen das oder die Leuchtmittel angeordnet sind, partielle Aussparungen auf, welche zumindest ein Anzeigefenster für das von vom Leuchtmittel ausgesendete Licht definiert. In diesen Aussparungen ist das erste Mittel zur Reduktion des Transmissionsgrades angeordnet. Die Aussparungen im zweiten Mittel zur Reduktion des Transmissionsgrades $\tau_{vis}$ werden somit vom Transmissionsfilter bedeckt. Transmissionsfilter und Leuchtmittel sind mit anderen Worten derart im Bereich dieser Aussparung angeordnet, so dass das vom Leuchtmittel emittierte Licht durch die Aussparung, den Transmissionsfilter sowie die Glaskeramik austreten kann.

Der Transmissionsfilter kann hierbei insbesondere an den Rändern der Aussparungen mit dem zweiten Mittel zur Reduktion des Transmissionsgrades $\tau_{vis}$ überlappen. Somit können einzelne Bereiche der Abdeckvorrichtung sowohl ein zweites Mittel zur Reduktion des Transmissionsgrades $\tau_{vis}$ als auch einen Transmissionsfilter aufweisen.

Gemäß einer bevorzugten Ausführungsform weisen die Glaskeramik und das erste Mittel zur Reduktion des Lichttransmissionsgrades zusammen einen Dead-Front-Wert < 3%, bevorzugt <2% und besonders bevorzugt kleiner 1% auf.

Der Dead-Front-Wert wird hierbei an Hand der Grauwerte bzw. der Grauwertdifferenz in Durchsicht durch die Glaskeramik und das erste Mittel zur Reduktion des Lichttransmissionsgrades bestimmt. Der Dead-Front-Wert entspricht somit der Grauwertdifferenz $|G_1-G_2|$. Die Bestimmung dieser Grauwertdifferenz wird im Folgenden näher erläutert.

Zur Bestimmung der Grauwertdifferenz wird eine Grauwertmesseinrichtung verwendet. Eine Grauwertmesseinrichtung dient zur Bestimmung prozentualer Grauwerte, insbesondere, um Graustufenunterschiede zwischen verschiedenen Bereichen einer Probe bestimmen zu können. Der Messaufbau befindet sich in einer Dunkelkammer, um Fremdlicht ausschließen zu können.

In der Dunkelkammer sind vier RAL-Karten platziert. Die erste RAL-Karte hat die RAL-Farbe 9017 (verkehrsschwarz) und die zweite RAL-Karte hat die RAL-Farbe 7012 (basaltgrau). Diese beiden RAL-Karten werden von der Probe nicht bedeckt und dienen zur Kalibrierung. Die dritte RAL-Karte hat ebenfalls die RAL-Farbe 9017 (verkehrsschwarz), die vierte RAL-Karte hat die RAL-Farbe 9003 (signalweiß). Diese beiden Karten werden wenigstens teilweise von der Probe, im vorliegenden Fall also der Glaskeramik und dem ersten Mittel zur Reduzierung des Lichttransmissionsgrades, bedeckt und dienen der Messwerterfassung.

In einem Abstand d, welcher beispielsweise 606 Millimeter beträgt, ist eine Kamera mit einem Objektiv angeordnet. Optional kann vor dem Objektiv ein Filter, beispielsweise ein Langpassfilter oder ein Tristimulus-Filter, angebracht sein.

Bei der verwendeten Messvorrichtung kommen folgende Komponenten zum Einsatz:

- Die Kamera ist ausgebildet als eine acA1920 - 40$\mu$m / Graustufenkamera der Basler AG und das Objektiv ist ausgebildet als LM35HC Megapixel der Kowa GmbH.
- Es wird kein optionaler Filter vor dem Objektiv verwendet.

Die Einstellungen der Kamera werden so gewählt, dass das Bild im Messbereich weder über- noch unterbelichtet ist.

In der Dunkelkammer befinden sich zudem LED-Spots der OSRAM Licht AG mit Farbtemperatur 4000K, EAN:

4052899944282. Die LED-Spots sind so eingestellt, dass auf der Oberseite der Glaskeramik eine Helligkeit von 1200 Lux herrscht. Generell kann unabhängig vom jeweiligen Leuchtmittel, soweit dieses eine für Haushalte übliche Farbtemperatur und/oder spektrale Intensitätsverteilung aufweist, auch eine andere Lichtquelle, wie beispielsweise ein Schwarzkörperstrahler, insbesondere eine handelsübliche Halogenlichtquelle, verwendet werden, soweit diese eine Helligkeit von etwa 1200 Lux erzeugen. Hiermit wird eine Beleuchtungssituation erzielt, die für Küchen und Labore typisch ist. Hinzuweisen ist darauf, dass die mittels der Grauwertmesseinrichtung bestimmten Messwerte von der Helligkeit im Wesentlichen unabhängig sind, so dass auch eine andere Beleuchtung vorgesehen sein kann.

Für die Messung wird das Beleuchtungssystem eingeschaltet und die Dunkelkammer geschlossen. Mit der Kamera wird ein Graustufenbild der Situation aufgenommen. Mit anderen Worten wird mittels der Grauwertmesseinrichtung ein Graustufenbild erzeugt, welches zumindest folgendes abbildet: Die beiden RAL-Karten mit den RAL-Farben 9017 und 9003 durch die Probe hindurch betrachtet, die nicht bedeckte RAL-Karte mit RAL-Farbe 9017 und die nicht bedeckte RAL-Karte mit RAL-Farbe 7012.

Basierend auf dem erzeugten Graustufenbild stellt die Grauwertmesseinrichtung einen Messwert M1 bereit, welcher der RAL-Karte mit der RAL-Farbe 9017 durch die Probe hindurch betrachtet, entspricht.

Ferner stellt die Grauwertmesseinrichtung einen Messwert M2 bereit, welcher der RAL-Karte mit der RAL-Farbe 9003 durch die Probe hindurch betrachtet, entspricht.

Darüber hinaus stellt die Grauwertmesseinrichtung zwei weitere Messwerte bereit, welche den beiden nicht bedeckten RAL-Karten zur Kalibrierung entsprechen.

Bei der verwendeten Grauwertmesseinrichtung wird das Graustufenbild mit Hilfe der Bildauswertungssoftware Halcon SDK Industry 12 der MVTec Software GmbH ausgewertet. Es hat sich gezeigt, dass die Messung unabhängig von den Belichtungsbedingungen und der Helligkeit der Beleuchtung ist, vorausgesetzt das Bild ist nicht unter- oder überbelichtet. Über eine Auswerteroutine in der Software können auf dem Bild verteilt diverse Messfenster auf ihre Graustufen hin ausgewertet werden. In jedem Messfenster kann der Mittelwert der Grauwerte aller Pixel über die Messfläche inklusive der Standardabweichung gemessen und festgehalten werden. Mit anderen Worten können die Messwerte $M_1$, $M_2$ und die Messwerte der RAL-Karten als Mittelwerte über Messbereiche gebildet sein, wobei die Messbereiche jeweils mindestens eine Fläche von 0,2 cm$^2$, vorzugsweise 0,9 cm$^2$ aufweisen.

Basierend auf den gemessenen Messwerten $M_1$, $M_2$ und den Messwerten der beiden RAL-Karten, welche jeweils absolute Werte darstellen, werden prozentuale Grauwerte $G_1$ und $G_2$ berechnet. Mit anderen Worten, werden relative Kontraste in Prozent berechnet, um Messungen vergleichbar zu machen.

Dazu wird eine lineare Funktion G dadurch definiert, dass diese lineare Funktion dem Messwert, welcher der RAL-Karte mit RAL-Farbe 9017 entspricht, einen prozentualen Grauwert von 20 % zuordnet und dem Messwert, welcher der RAL-Karte mit RAL-Farbe 7012 entspricht prozentualen Grauwert von 90 % zuordnet. Mit anderen Worten werden die Messwerte der RAL-Karten 9017 als 20 % und 7012 als 90 % referenziert, worüber eine lineare Umrechnung für alle gemessenen Grauwerte definiert wird.

Mit der linearen Funktion G=G(M), welche absolute Messwerte in prozentuale Grauwerte umrechnet, werden die prozentualen Grauwerte $G_1$ und $G_2$ berechnet als Gi=G(Mi) und $G_2$=G($M_2$).

Optional können in der Dunkelkammer zur Erzeugung weiterer Messpunkte auch zusätzlich weitere RAL-Karten vorgesehen sein, beispielsweise mit RAL-Farbe 9006 (weißaluminium) und/oder RAL-Farbe 7038 (achatgrau).

Die Differenz der beiden gemessenen prozentualen Grauwerte |G1-G2| ist ein Maß für den Dead-Front-Effekt. Es hat sich herausgestellt, dass Werte unterhalb von 5,0 % von dem menschlichen Auge kaum noch wahrnehmbar sind. Mit anderen Worten wird ein Dead-Front-Effekt erreicht. Für einen noch besseren Dead-Front-Effekt ist es bevorzugt, wenn die Grauwertdifferenz geringer ist als 3,5 %, noch bevorzugter geringer ist als 2,5 % und besonders bevorzugt geringer ist als 1,5 %. Zur Bestimmung dieser Werte wurde eine statistische Analyse mit unterschiedlichen Beobachtern durchgeführt.

Die bei dieser Messung durchgeführte Bewertung des Dead-Front-Effekts ist besonders schwierig zu erfüllen, da als Referenz eine weiße und eine schwarze Farbkarte verwendet werden, was dem maximal möglichen Kontrast entspricht. Abdeckvorrichtungen, die diese Anforderung erfüllen, haben also einen ausreichenden Dead-Front-Effekt sogar für Bauteile, die auf der Seite der betrieblichen Rückseite starke Helligkeitskontraste aufweisen. Dies können beispielsweise weiße oder hoch reflektierende elektronische Bauteile auf einer dunklen, beispielsweise dunkelgrünen Leiterplatte sein.

Die vorstehend beschriebene Messmethode mit welcher die prozentualen Grauwerte $G_1$ und $G_2$ ableitbar sind wird weiter unten anhand von Figuren detaillierter beschrieben. Ebenso wird dort auch der optische Langpassfilter näher definiert.

Die Glaskeramiken der erfindungsgemäßen Abdeckvorrichtungen erscheinen auf Grund der geringen Lichttransmissionswerte im VIS-Bereich $\tau_{vis}$ in Aufsicht dunkel. Durch die Anordnung des Transmissionsfilters und eines zweiten Mittels zur Reduktion des Lichttransmissionsgrades auf der betrieblichen Rückseite der Abdeckvorrichtung ist somit für einen Betrachter, der die Abdeckvorrichtung von der betrieblichen Vorderseite aus betrachtet, deren Farbe bzw. Farbort nicht oder nur schwer erkennbar. Vielmehr besteht der in Aufsicht erkennbare optische Effekt der beiden Mittel in einer Abdunklung.

Dies ist vorteilhaft, da somit das erste und das zweite Mittel zur Reduktion des Lichttransmissionsgrades, anders als beispielsweise bei Abdeckvorrichtungen mit transparenten Glaskeramiken, farblich nicht exakt aufeinander abgestimmt werden müssen. So können Farbton bzw. Farbort des Transmissionsfilters und des zweiten Mittels zur Reduktion des Lichttransmissionsgrades voneinander abweichen, ohne dass dies in Aufsicht optisch auffällig ist. Dies ermöglicht eine Auswahl von Transmissionsfilter und zweitem Mittel zur Reduktion des Transmissionsgrades unabhängig voneinander, was insbesondere die Auswahl geeigneter Transmissionsfilter erheblich vergrößert.

Ein weiterer Vorteil gegenüber Abdeckvorrichtungen mit transparenten Glaskeramiken besteht darin, dass die für Transmissionsfilter und zweites Mittel zur Reduktion des Lichttransmissionsgrades verwendeten Materialien eine geringere Farbstabilität über die gesamte Lebensdauer aufweisen müssen, da dadurch entstehende Farbdifferenzen bei Aufsicht durch die volumengefärbte Glaskeramik von der betrieblichen Vorderseite aus vom Betrachter nicht oder nur in einem sehr geringen Maße wahrgenommen werden können.

Gemäß einer ersten Variante der Erfindung ist das Leuchtmittel eine schmalbandige Lichtquelle und der Transmissionsfilter weist einen spektralen Transmissionsgrad von wenigstens 50%, bevorzugt wenigstens 60% und besonders bevorzugt wenigstens 70% für zumindest eine Wellenlänge des Spektralbereichs, in dem das Leuchtmittel emittiert und einen spektralen Transmissionsgrad von weniger als 30%, bevorzugt weniger als 20% und besonders bevorzugt von weniger als 10% für wenigstens eine Wellenlänge im verbleibenden Spektralbereich des sichtbaren Lichts auf. Insbesondere weist der Transmissionsfilter einen spektralen Transmissionsgrad im Bereich von 0,001 bis 30%, bevorzugt im Bereich von 0,001 bis 20% und besonders bevorzugt im Bereich von 0,001 bis 10% für wenigstens eine Wellenlänge, vorzugsweise für alle Wellenlängen im verbleibenden Spektralbereich des sichtbaren Lichts auf.

Unter einer schmalbandigen Lichtquelle wird hierbei eine Lichtquelle mit einer spektralen Halbwertsbreite von maximal 100 nm, bevorzugt maximal 50 nm, und besonders bevorzugt maximal 25 nm verstanden. Unter dem verbleibenden Spektralbereich wird der VIS-Bereich des Licht, d.h. Licht mit einer Wellenlänge im Bereich von 380 bis 780 nm, abzüglich der von der Lichtquelle emittierten Wellenlängen verstanden. Für eine LED mit einer Emission bei 550 nm und einer Halbwertsbreite (FWHM) von 50 nm ergibt sich somit ein verbleibender Spektralbereich, der durch die beiden Teilbereiche von 380 bis 525 nm und von 575 bis 780 nm gebildet wird.

In einer bevorzugten Ausführungsform weist der Transmissionsfilter hierbei für alle Wellenlängen, bei denen das Leuchtmittel emittiert, einen Transmissionsgrad von wenigstens 50%, bevorzugt wenigstens 60% und besonders bevorzugt wenigstens 70% auf. Zusätzlich weist der Transmissionsfilter einen spektralen Transmissionsgrad von weniger als 30%, bevorzugt weniger als 20% und besonders bevorzugt von weniger als 10% für jede der Wellenlängen im verbleibenden Spektralbereich auf. Insbesondere weist der Transmissionsfilter einen spektralen Transmissionsgrad im Bereich von 0,001 bis 30%, bevorzugt im Bereich von 0,001 bis 20% und besonders bevorzugt im Bereich von 0,001 bis 10% für wenigstens eine Wellenlänge, vorzugsweise für alle Wellenlängen im verbleibenden Spektralbereich des sichtbaren Lichts auf.

Das Transmissionsspektrum des ersten Mittels zur Reduktion der Lichttransmission ist gemäß dieser Ausführungsform an das Emissionsspektrum des Leuchtmittels angepasst, d.h. hohe Transmissionswerte werden im Wesentlichen nur für die Wellenlängen erreicht, welche vom Leuchtmittel emittiert werden. Insbesondere kann der Transmissionsfilter bzw. das erste Mittel zur Reduktion des Lichttransmissionsgrades ein Bandpass-, Tiefpass- oder Hochpassfilter sein. Dies hat neben einer guten Anzeigefähigkeit bei einem gleichzeitig guten Dead-Front-Effekt zur Folge, dass der Transmissionsfilter keine Farbortverschiebung des emittierten Lichtes erfolgt.

Somit weist die Abdeckvorrichtung eine gute Anzeigefähigkeit für das auf der betrieblichen Rückseite angebrachte Leuchtmittel auf, während die niedrigen Transmissionswerte für der verbleibenden Spektralbereich einen guten Dead-Front-Effekt ermöglichen.

Eine Ausführungsform der oben beschrieben ersten Variante sieht vor, dass das Gesamttransmissionsspektrum von Transmissionsfilter und Glaskeramik im VIS-Bereich inhomogen ist. Hierbei wird unter einem inhomogenen Transmissionsspektrum insbesondere ein Transmissionsspektrum verstanden, bei dem sich die Transmissionsgrade einzelner Wellenlängen bzw. Wellenlängenbereiche des Spektrums voneinander unterscheiden. Gemäß dieser Ausführungsform weisen der Transmissionsfilter und die Glaskeramik zusammen einen Transmissionsgrad im Bereich von 500 bis 600 nm, bevorzugt im Bereich von 450 bis 650 nm und besonders bevorzugt im Bereich von 400 bis 700 nm auf, bei dem das Verhältnis des niedrigsten Wertes des spektralen Transmissionsgrades in diesem spektralen Bereich zum höchsten Wert des spektralen Transmissiongrades in diesem spektralen Bereich höchstens 0,7, vorzugsweise höchstens 0,5 beträgt. Als Untergrenze können Werte von 0,001 oder sogar weniger erreicht werden. Ein Filter mit einem maximalen spektralen Transmissionsgrad von 80 % und einem minimalen spektralen Transmissionsgrad von 0,1 % unter einer farbneutralen Glaskeramik weist beispielsweise einen Wert von 0,00125 % auf.

Gemäß einer bevorzugten Ausführungsform sind Transmissionsfilter, Glaskeramik und Leuchtmittel der Abdeckvorrichtung so aufeinander abgestimmt, dass die Anzeigefähigkeit für rotes Licht besonders hoch ist. Die entsprechende Abdeckvorrichtung weist daher ein Leuchtmittel auf, welches eine Peak-Wellenlänge oder eine dominante Wellenlänge im spektralen Bereich von 580 bis 695 nm, bevorzugt im Bereich von 600 bis 685 nm und besonders bevorzugt im Bereich von 620 bis 675 nm emittiert.

Der Transmissionsfilter weist in dieser Ausführungsform einen spektralen Transmissionsgrad von wenigstens 50%, vorzugsweise von wenigstens 60% und besonders bevorzugt wenigstens 70% für zumindest eine Wellenlänge, bevorzugt für jede Wellenlänge im Bereich von 620 bis 675 nm auf. Insbesondere weist der Transmissionsfilter die vorstehend genannten Transmissionsgrade für zumindest eine oder auch für jede Wellenlänge im Bereich von 580 bis 695 nm, bevorzugt im Bereich von 600 bis 685 nm auf. Somit weist der Transmissionsfilter relativ hohe Transmissionsgrade für die Wellenlängen des vom Leuchtmittel emittierten Lichts auf, so dass eine gute Anzeigefähigkeit des emittierten Lichts gewährleistet ist.

Gleichzeitig zeigt der Transmissionsfilter für die übrigen Wellenlängenbereiche geringere Transmissionsgrade, so dass ein guter Dead-Front-Effekt erreicht wird. Vorzugsweise ist der Transmissionsgrad des Transmissionsfilters für eine oder sogar für jede Wellenlänge im Spektralbereich von 450 bis 490 nm kleiner als 30%, bevorzugt kleiner als 20% und besonders bevorzugt kleiner als 10%. Insbesondere weist der Transmissionsfilter einen spektralen Transmissionsgrad für eine oder sogar für jede Wellenlänge im Spektralbereich von 450 bis 490 nm im Bereich von 0,001 bis 30%, bevorzugt im Bereich von 0,001 bis 20% und besonders bevorzugt im Bereich von 0,001 bis 10% auf.

Gemäß einer bevorzugten Ausführungsform weist der Transmissionsfilter die vorstehend genannten niedrigen Transmissionswerte insbesondere für eine oder sogar jede Wellenlänge im Spektralbereich von 415 bis 525 nm und vorzugsweise im Spektralbereich von 380 bis 550 nm auf.

Eine bevorzugte Ausführungsform sieht vor, dass der Transmissionsfilter für jede Wellenlänge im Bereich von 600 bis 685 nm einen Transmissionsgrad von zumindest 50%, bevorzugt von zumindest 60% und besonders bevorzugt von zumindest 70% aufweist und gleichzeitig der Transmissionsgrad für jede Wellenlänge im Spektralbereich von 280 bis 550 nm weniger als 30%, bevorzugt weniger als 20% und besonders bevorzugt weniger als 10% beträgt. Insbesondere weist der Transmissionsfilter einen spektralen Transmissionsgrad für eine oder sogar für jede Wellenlänge im Spektralbereich von 280 bis 550 nm im Bereich von 0,001 bis 30%, bevorzugt im Bereich von 0,001 bis 20% und besonders bevorzugt im Bereich von 0,001 bis 10% auf.

Alternativ kann die Abdeckvorrichtung insbesondere für blaues Licht eine erhöhte Anzeigefähigkeit aufweisen. In dieser Ausführungsform emittiert das Leuchtmittel Licht einer Peak-Wellenlänge oder dominanten Wellenlänge im spektralen Bereich von 425 bis 525 nm, bevorzugt im spektralen Bereich von 430 bis 500 nm und besonders bevorzugt im spektralen Bereich von 440 bis 485 nm.

Das Transmissionsspektrum des Transmissionsfilters ist hierbei derart an das Emissionsspektrum des Leuchtmittels angepasst, dass der Transmissionsfilter hohe Transmissionsgrade für das vom Leuchtmittel emittierte Licht aufweist, während die Transmissionsgrade für den restlichen sichtbaren Spektralbereich deutlich niedriger sind. Der Transmissionsfilter weist hierbei einen spektralen Transmissionsgrad von von wenigstens 50%, bevorzugt wenigstens 60% und besonders bevorzugt wenigstens 70% für zumindest eine Wellenlänge, bevorzugt für jede Wellenlänge im Bereich von 440 bis 485 nm, bevorzugt im Bereich von 430 bis 500 nm und besonders bevorzugt im Bereich von 425 bis 525 nm und einen spektralen Transmissionsgrad von weniger als 30%, bevorzugt weniger als 20%, besonders bevorzugt weniger als 10% für zumindest eine, bevorzugt für jede Wellenlänge im Spektralbereich von 600 bis 640 nm, bevorzugt 590 bis 660 nm und besonders bevorzugt 550 bis 700 nm aufweist auf. Insbesondere weist der Transmissionsfilter einen spektralen Transmissionsgrad für eine oder sogar für jede Wellenlänge im Spektralbereich von 600 bis 640 nm im Bereich von 0,001 bis 30%, bevorzugt im Bereich von 0,001 bis 20% und besonders bevorzugt im Bereich von 0,001 bis 10% auf.

In einer zweiten Variante der Erfindung weisen Transmissionsfilter und Glaskeramik ein homogenes Gesamttransmissionsspektrum auf. Das gemeinsame Transmissionsspektrum von Transmissionsfilter und Glaskeramik zeigt hierbei im spektralen Bereich von 500 bis 600 nm, bevorzugt im Bereich von 450 bis 650 nm und besonders bevorzugt im Bereich von 400 bis 700 nm ein Verhältnis des niedrigsten Werts des spektralen Transmissionsgrades in dem Bereich zum höchsten Wert von mindestens 0,5. Gemäß einer bevorzugten Ausführungsform beträgt das Verhältnis des niedrigsten Werts des spektralen Transmissionsgrades im entsprechenden spektralen Bereich zum höchsten Wert von mindestens 0,6, bevorzugt mindestens 0,7.

In dieser zweiten Variante weist die Abdeckvorrichtung ebenfalls schmalbandige Leuchtquellen auf, so dass der Farbort des emittierten Lichtes nicht durch den Transmissionsfilter verschoben wird. Ein weiterer Vorteil bei der Verwendung von schmalbandigen Lichtquellen besteht darin, dass, anders als beispielsweise bei breitbandigen Lichtquellen wie weißen LEDs, bei einer Veränderung der Transmissionseigenschaften des Filters wie sie beispielsweise durch Alterungsprozesse auftreten können, die Anzeige nur insgesamt dunkler erscheint. Eine Veränderung der Transmissionseigenschaften des Transmissionsfilters führt jedoch nicht zu einer Verschiebung des Farbortes der Anzeige. Vergilbungseffekte, wie sie bei weißen LEDs auftreten können, werden in dieser Variante der Erfindung somit vermieden.

Durch das homogene Gesamttransmissionsspektrum von Glaskeramik und Transmissionsfilter sind hierbei alle Lichtfarben gleichermaßen darstellbar, so dass in dieser Variante das Transmissionsspektrum des Transmissionsfilters lediglich an das Transmissionsspektrum der Glaskeramik zur Erzielung eines homogenen Gesamttransmissionsspektrums angepasst werden muss. Eine Abstimmung des Transmissionsspektrums des Transmissionsfilters an das Emissionsspektrum des Leuchtmittels ist dagegen nicht notwendig.

Somit können beispielsweise in dieser Variante der Erfindung Leuchtmittel mit unterschiedlichen Farben eingesetzt werden, ohne dass der Transmissionsfilter ausgetauscht werden muss. Dies ist insbesondere in Hinblick auf eine Reduzierung der Produktionskosten vorteilhaft.

Des Weiteren kann so auch die Komplexität des Aufbaus einer Abdeckplatte mit mehreren, verschiedenfarbigen Leuchtmitteln im Vergleich zur ersten Variante erheblich reduziert werden, da der Transmissionsfilter unabhängig vom jeweiligen Leuchtmittel eingesetzt und somit ein einziger Transmissionsfilter für die gesamte Abdeckvorrichtung verwendet werden kann. Eine Weiterbildung dieser zweiten Variante sieht daher vor, dass die Abdeckvorrichtung zumindest zwei schmalbandige Leuchtmittel mit unterschiedlichen Emissionswellenlängen aufweist. Vorzugsweise werden Leuchtmittel mit unterschiedlichen Farben eingesetzt. Gemäß einer anderen Ausführungsform wird neben zumindest einer schmalbandigen Leuchtquelle zusätzlich eine breitbandige Leuchtquelle, beispielsweise zur Erzeugung von weißem Licht eingesetzt werden. Anders als die schmalbandige Leuchtquelle erfährt diese Leuchtquelle jedoch eine Farbortverschiebung bei Durchtritt durch den Transmissionsfilter.

In einer dritten Variante der Erfindung weist die Abdeckvorrichtung ein breitbandiges Leuchtmittel und als erstes Mittel zur Reduktion des Transmissionsgrades einen Neutraldichtefilter auf. Unter einem Neutraldichtefilter wird hierbei insbesondere ein Transmissionsfilter mit einem homogenen Transmissionsspektrum im sichtbaren Spektralbereich verstanden. In dieser Variante wird somit das vom Leuchtmittel emittierte Licht im VIS-Bereich gleichmäßig abgeschwächt, ohne dass es zu einer Verschiebung des Farbortes durch den Transmissionsfilter kommt. Auf Grund des Transmissionsspektrums der Glaskeramik erfolgt jedoch bei Durchtritt des vom Leuchtmittel emittierten Lichtes durch die Glaskeramik eine Verschiebung des Farbortes. Diese Farbortverschiebung ist hierbei abhängig von der jeweiligen Glaskeramik bzw. deren Zusammensetzung. So weisen insbesondere vanadiumhaltige Glaskeramiken ein Transmissionsspektrum auf, das eine erhöhte Transmissions im roten Spektralbereich zeigt. Dies führt beispielsweise dazu, dass weißes Licht, welches auf der betrieblichen Rückseite der Abdeckvorrichtung emittiert wird, nach dem Durchtritt durch die Glaskeramik eine Farborterschiebung in den orangenen Bereich zeigt.

In einer Ausführungsform dieser dritten Variante enthält die Glaskeramikplatte Vanadiumoxid als Hauptfärbemittel und das Leuchtmittel emittiert Licht mit einem Farbort innerhalb des Polygons, das durch folgende Farbkoordinaten aufgespannt wird:

| x | y |
|---|---|
| 0,19 | 0,25 |
| 0,16 | 0,29 |
| 0,31 | 0,44 |
| 0,38 | 0,51 |
| 0,46 | 0,44 |
| 0,38 | 0,42 |
| 0,19 | 0,25 |

Durch das inhomogene Transmissionsspektrum der Glaskeramik erfolgt hierbei bei Durchtritt des emittierten Lichtes durch Glaskeramik eine Farbortverschiebung, so dass das auf der betrieblichen Vorderseite der Abdeckvorrichtung austretende Licht für den Betrachter weiß erscheint.

Licht erscheint für den Betrachter insbesondere dann weiß, wenn es einen Farbort innerhalb des Polygons aufweist, das durch folgende Farbkoordinaten aufgespannt wird:

| x | y |
|---|---|
| 0,28 | 0,27 |
| 0,28 | 0,3 |
| 0,34 | 0,37 |
| 0,4 | 0,41 |
| 0,48 | 0,43 |
| 0,48 | 0,4 |

(fortgesetzt)

| x | y |
|------|------|
| 0,41 | 0,37 |
| 0,35 | 0,33 |

Es hat sich als besonders vorteilhaft herausgestellt, wenn vom Leuchtmittel emittierte Licht durch den Transmissionsfilter bzw. das erste Mittel zur Reduktion des Transmissionsgrades nicht oder zumindest nicht stark gestreut wird. So weist gemäß einer bevorzugten Ausführungsform der Transmissionsfilter einen Haze von maximal 15%, bevorzugt maximal 10% und besonders bevorzugt von maximal 2% auf. Der Haze Wert stellt hierbei ein Maß für die Trübung von transparenten Proben dar und beschreibt den Anteil des transmittierten Lichtes, der von der durchstrahlten Probe nach vorne gestreut werden. Über den Haze Wert können somit Materialfehler in der Oberfläche oder der Struktur der Probe, welche zu einer Streuung führen, quantifiziert werden. Er wird mit Hilfe der Messnorm ASTM D 1003 ermittelt. Die Bestimmung des Haze Wertes erfolgt hierbei mit einem Spektrometer mit Integrationskugel.

Alternativ oder zusätzlich können die spektralen Transmissionsgrade bei Platzierung der Probe im Probenraum der Ulbrichtkugel ($\tau_{PiP}$) und bei Platzierung der Probe vor der Kugel ($\tau_{PvK}$) bestimmt werden. Der Transmissionsgrad $\tau_{PiP}$ berücksichtigt hierbei nur den direkt transmittierten Anteil der Strahlung. Bei der Transmissionsmessung mit einer vor der Kugel platzierten Probe ($\tau_{PvK}$) wird dagegen sowohl der gestreute als auch der direkt transmittierte Anteil erfasst. Vorzugsweise weist der Transmissionsfilter ein Verhältnis der spektralen Transmissionsgrade von mindestens 0,7, bevorzugt mindestens 0,8 und besonders bevorzugt von mindestens 0,9 bei einer Wellenlänge von 450 nm und/oder 630 nm aufweist.

Die erfindungsgemäße Abdeckvorrichtung eignet sich besonders zur Verwendung als Abdeckvorrichtung für ein Kochgerät, insbesondere als Kochfläche, Backofentür, Küchenarbeitsplatte, Abdeckvorrichtung für ein Bediengerät oder für ein Bedienfeld für ein Hausgerät.

Figurenbeschreibung

Nachfolgend wird die Erfindung näher an Hand der Figuren 1 bis 18 beschrieben. Es zeigen:

Fig. 1      eine schematische Darstellung eines ersten Ausführungsbeispiels einer erfindungsgemäßen Abdeckvorrichtung, welche zusätzlich zum Transmissionsfilter eine Unterseitenbeschichtung aufweist,

Fig. 2      eine schematische Darstellung eines zweiten Ausführungsbeispiels, bei dem der Anzeigenbereich durch eine Unterseitenbeschichtung maskiert ist,

Fig. 3      eine schematische Darstellung eines dritten Ausführungsbeispiels, bei dem der Transmissionsfilter auf der Lichtquelle angeordnet ist,

Fig. 4      eine schematische Darstellung eines vierten Ausführungsbeispiels, bei dem die Abdeckvorrichtung eine weitere Lichtquelle aufweist,

Fig. 5      eine schematische Darstellung eines fünften Ausführungsbeispiels, bei dem der Transmissionsfilter als Beschichtung auf einem Träger ausgebildet ist,

Fig. 6      die Transmissionsspektren verschiedener, zur Verwendung als Bestandteil der Abdeckplatte der Abdeckvorrichtung geeigneter Glaskeramiken,

Fig. 7-11      die Transmissionsspektren verschiedener Transmissionsfilter,

Fig. 12      die Emissionsspektren von schmalbandigen Leuchtquellen,

Fig. 13      Transmissionspektren geeigneter Bandfilter,

Fig. 14      die gemeinsamen Transmissionsspektren von Glaskeramik und den in Fig. 13 gezeigten Transmissionsfiltern,

Fig. 15          Transmissionsspektren zweier Neutraldichtefilter,

Fig. 16          das Emissionspektrum zweier zur Verwendung mit den in Fig. 15 gezeigten Filtern geeigneten Licht-quellen,

Fig. 17          das Emissionspektrum einer türkisen LED,

Fig. 18          das Transmissionsspektrum der Glaskeramik 60, sowie

Fig. 19 und 20    schematische Darstellungen des Messaufbaus zur Bestimmung des Dead-Front-Wertes.

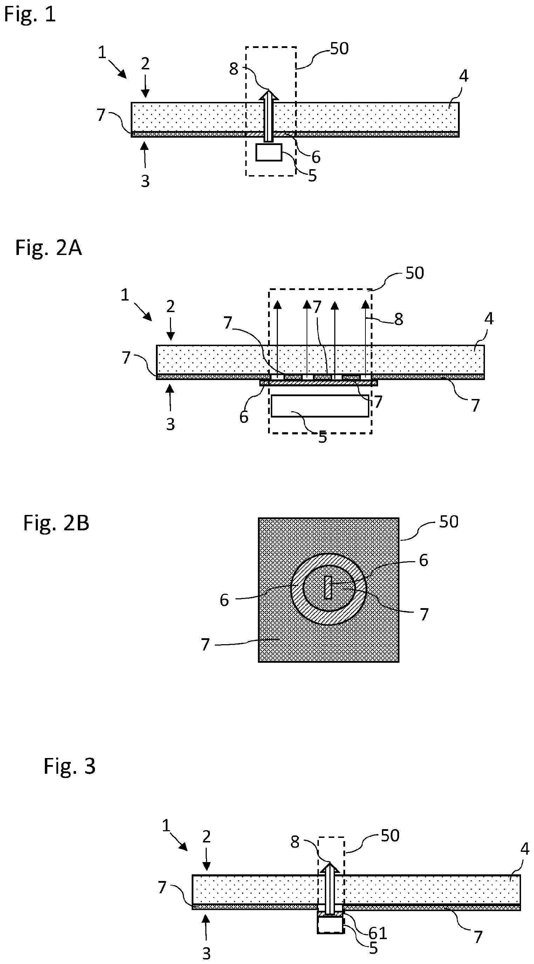

In Fig. 1 ist schematisch der Aufbau einer Abdeckvorrichtung 1 als ein erstes Ausführungsbeispiel als Querschnitt dargestellt. Die Abdeckvorrichtung 1 weist hierbei eine betriebliche Vorderseite 2 und eine betriebliche Rückseite 3 auf. Unter der betrieblichen Vorderseite 2 wird dabei die Seite der Abdeckvorrichtung 1 verstanden, welche im eingebauten Zustand, beispielsweise beim Einbau der Abdeckvorrichtung 1 in Haushaltsgerät wie einen Herd, dem Benutzer zugewandt ist. Unter der betrieblichen Rückseite 3 wird entsprechend die Seite der Abdeckvorrichtung 1 bezeichnet, welche im eingebauten Zustand in Richtung der Innenseite des entsprechenden Gerätes gerichtet ist.

In dem in Fig. 1 gezeigten Ausführungsbeispiel weist die vorzugsweise plattenförmige Abdeckvorrichtung 1 auf der Unterseite der Glaskeramik 4 einen Transmissionsfilter 6 als erstes Mittel zur Reduzierung des Transmissionsgrades auf.

Die Glaskeramik 4 ist in diesem Ausführungsbeispiel eine volumengefärbte, vanadiumhaltige LAS-Glaskeramik. Die Glaskeramikplatte 4 weist eine Dicke im Bereich von 3 bis 6 mm und eine Transmission $\tau_{vis}$ von 4,5% auf. Um die Durchsicht auf die auf der betrieblichen Rückseite angeordneten technischen Vorrichtungen auch im Heissbereich zu verhindern, weist die Abdeckvorrichtung 1 in diesem Ausführungsbeispiel ein zweites Mittel zur Reduktion des Transmissionsgrades auf. Das zweite Mittel zur Reduktion des Transmissionsgrades ist in diesem Ausführungsbeispiel als Unterseitenbeschichtung 7 ausgebildet und entsprechend auf der betrieblichen Rückseite 3 der Glaskeramik 4 angeordnet. Die Unterseitenbeschichtung 7 ist opak und zumindest bis zu Temperaturen von 300°C temperaturstabil. An den Stellen, an denen die Abdeckvorrichtung 1 Displays oder Leuchtanzeigen aufweist, sind Aussparungen in der Unterseitenbeschichtung 7 vorgesehen. Die Unterseitenbeschichtung 7 weist somit eine maskierte Struktur auf. Innerhalb dieser Aussparung ist der der Transmissionsfilter 6 angeordnet. Unterhalb dieser Aussparungen ist auf der betrieblichen Rückseite die Leuchtquelle 5 angebracht. Im eingeschalteten Zustand emittiert die Leuchtquelle 5 Licht 8, welches durch den Transmissionsfilter 6 und die Glaskeramik 4 strahlt und somit von der betrieblichen Vorderseite 2 aus vom Betrachter als Anzeige 50 wahrgenommen werden kann.

Die Maskierung der Unterseitenbeschichtung 7 kann auch so strukturiert sein, dass hierdurch Symbole dargestellt werden. Dies wird in Fig. 2a dargestellt. So ist in diesem Ausführungsbeispiel die Unterseitenbeschichtung 7 auch auf der betrieblichen Rückseite 3 des Anzeigenbereichs 50 angeordnet, wobei die Unterseitenbeschichtung 7 im Anzeigenbereich 50 Unterbrechungen aufweist, durch welche das von der Leuchtquelle 5 emittierte Licht 8 durchstrahlen kann. Zur Erzielung des Dead-Front-Effektes ist der Transmissionsfilter 6 hierbei im Anzeigebereich 50 auf der Unterseitenbeschichtung 7 angeordnet. Vorzugsweise ist in diesem Ausführungsbeispiel der Transmissionsfilter 6 als Folie, Glas oder Beschichtung auf einem mittelbaren Träger ausgebildet. Fig. 2b zeigt eine schematische Darstellung des Anzeigebereichs 50 in Aufsicht. Hier wird durch die Maskierung in der Unterseitenbeschichtung 7 ein Symbol erzeugt, wobei die Unterseitenbeschichtung 7 die Konturen des Symbols bilden. Durch Aussparungen in der Unterseitenbeschichtung 7 ist der Transmissionsfilter 6 sichtbar. Wird nun die Leuchtquelle 5 eingeschaltet, so leuchten die Aussparungen in der Unterseitenbeschichtung 7.

In Fig. 3 ist schematisch ein drittes Ausführungsbeispiel im Querschnitt dargestellt, bei dem der Transmissionsfilter 61 auf der Leuchtquelle 5 angeordnet ist. Hierbei ist der Transmissionsfilter 61 als volumengefärbtes Glas, volumengefärbte Folie ausgebildet. Alternativ kann der Transmissionsfilter 61 als eine Beschichtung auf einer Trägerfolie oder einem Trägerglas angeordnet sein.

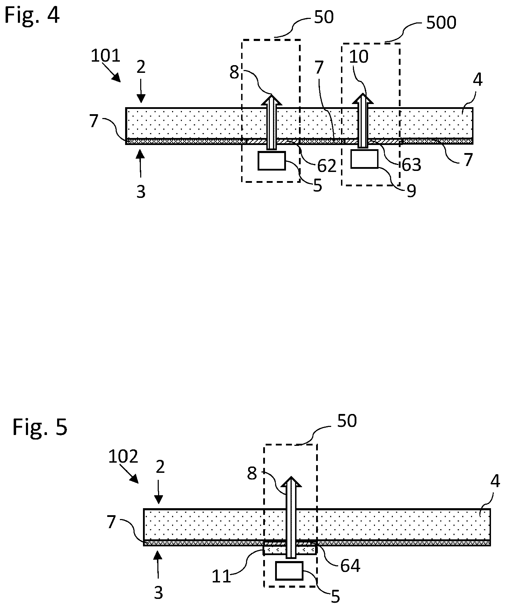

In Fig. 4 wird schematische eine Weiterbildung der Erfindung dargestellt, bei der die Abdeckvorrichtung 101 zwei Anzeigenbereiche 50, 500 aufweist. In diesem Ausführungsbeispiel ist jedem Anzeigenbereich 50, 500 ist eine eigene Leuchtquelle 5, 9 zugeordnet. Die Leuchtquellen 5 und 9 können sich in Hinblick auf ihr Emissionsspektrum unterscheiden, so dass beispielsweise der Anzeigenbereich 50 eine andere Farbe aufweist als der Anzeigenbereich 500. Es ist jedoch auch möglich, dass die Leuchtquellen 5 und 9 keine Unterschiede bezüglich ihres Emissionsverhaltens aufweisen. Entsprechendes gilt auch für die beiden Transmissionsfilter 62 und 63. Diese können sowohl das gleiche als auch unterschiedliche Transmissionsverläufe aufweisen. So lassen sich mit der in Fig. 4 gezeigten Weiterbildung sowohl Abdeckvorrichtungen mit unterschiedlichen Farbeffekten als auch Abdeckvorrichtungen mit mehreren, an verschiedenen lokalen Stellen der Abdeckvorrichtung angebrachten Anzeigebereichen, welche den gleichen Farbton aufweisen, realisieren.

Fig. 5 zeigt die schematische Darstellung einer Ausführungsform, bei der die Abdeckvorrichtung 102 einen Transmissionsfilter 64 in Form einer Beschichtung 64 auf einem transparenten, farblosen Trägermaterial 11 aufweist. Bei dem Trägermaterial kann es sich beispielsweise um eine Kunststoffplatte, eine Kunststofffolie oder eine Glasplatte. Entsprechende Transmissionsfilter 64 können hierbei kostengünstiger realisiert werden als Transmissionsfilter, welche aus einem volumengefärbten Material bestehen.

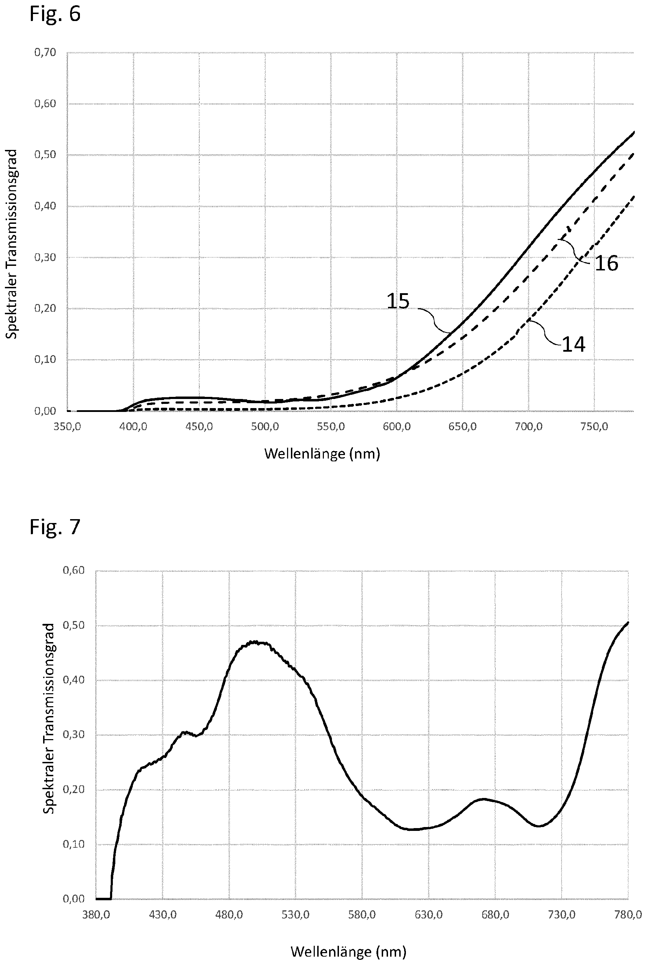

In Fig. 6 sind die Transmissionsverläufe verschiedener Glaskeramiken 14, 15 und 16 mit einer Dicke von 4 mm im sichtbaren Spektralbereich dargestellt. Alle Glaskeramiken 14, 15, 16 sind volumengefärbte, vanadiumhaltige Glaskeramiken und zur Verwendung als Glaskeramikplatte 4 in der erfindungsgemäßen Abdeckvorrichtung 1 geeignet. Der jeweilige Transmissionsverlauf sowie die Gesamttransmission der Glaskeramiken sind abhängig von der jeweiligen Zusammensetzung der Glaskeramik.

Die Glaskeramiken 16 und 14 weisen hierbei folgende Zusammensetzungsbereiche auf

| | |
|---|---|
| $Li_2O$ | 3,0 - 4,2 |
| $\Sigma\ Na_2O+K_2O$ | 0,2 - 1,5 |
| $MgO$ | 0 - 1,5 |
| $\Sigma\ CaO+SrO+BaO$ | 0 - 4 |
| $ZnO$ | 0 - 2 |
| $B_2O_3$ | 0 - 2 |
| $Al_2O_3$ | 19 - 23 |
| $SiO_2$ | 60 - 69 |
| $TiO_2$ | 2,5-4 |
| $ZrO_2$ | 0,5 - 2 |
| $P_2O_5$ | 0 - 3 |
| $SnO_2$ | 0,1 - < 0,6 |
| $\Sigma\ TiO_2+ZrO_2+SnO_2$ | 3,8 - 6 |
| $V_2O_5$ | 0,001 - 0,06 |
| $Fe_2O_3$ | 0,03 - 0,2 |

mit der Bedingung:

$$1 < Fe_2O_3 / V_2O_5 < 8,$$

Hierbei unterscheiden sich beispielsweise die Glaskeramiken 16 und 14 hinsichtlich ihres Gehaltes an $V_2O_5$, wobei der Gehalt an $V_2O_5$ in Glaskeramik 14 höher ist als in Glaskeramik 16.

Aus Fig. 6 wird deutlich, dass bei allen Glaskeramiken, 14, 15 und 16 die Transmission im sichtbaren Spektralbereich für Wellenlängen kleiner als 600 nm sehr gering ist und ab ca. 600 nm deutlich ansteigt. Eine Variante der Erfindung sieht vor, als erstes Mittel zur Reduktion des Transmissionsgrades ein Transmissionsfilter verwendet wird, dessen gemittelte spektrale Transmission im Bereich von 600 bis 650 nm niedriger ist, als die gemittelte spektrale Transmission im Bereich von 400 bis 450 nm. Somit ist der gemeinsame Transmissionsgrad von Glaskeramik und Transmissionsfilter weitgehend unabhängig von der Emissionswellenlänge der jeweils verwendeten Leuchtquellen. Dies ist insbesondere vorteilhaft, da somit eine Vielzahl unterschiedlicher, insbesondere schmalbandiger Leuchtquellen mit verschiedenen Emissionswellenlängen verwendet werden können. Für diese Ausführungsform werden besonders bevorzugt schmalbandige Lichtquellen vorgesehen. Als schmalbandige Lichtquellen werden solche Lichtquellen erachtet, deren Licht eine spektrale Verteilung mit einer Halbwertsbreite der Wellenlängen von höchstens 50 nm aufweist.

In den Fig. 7 bis 10 sind die spektralen Transmissionsverläufe unterschiedlicher Transmissionsfilter dargestellt, welche als erstes Mittel zur Reduktion des Transmissionsgrades in der erfindungsgemäßen Abdeckvorrichtung verwendet werden können. Der in Fig. 7 gezeigte Filter kann hierbei insbesondere mit den in Fig. 6 gezeigten Glaskeramiken kombiniert werden, wenn als Leuchtmittel eine LED mit einem Emissionsmaximum bei ca. 500 nm und einem FWHM von 50 nm oder weniger verwendet wird, da der Filter für diese Wellenlängen eine besonders hohe Transmission hat. Gleichzeitig weist er für den restlichen Bereich des VIS-Bereichs, insbesondere für den Bereich, in dem die vanadiumgefärbten Glaskeramiken eine hohe Transmission haben, eine niedrige Transmission auf und verhindert so effizient den Einblick in das Kochgerät. Hierdurch ergibt sich ein besonders guter Dead-Front-Effekt bei gleichzeitiger guter Sichtbarkeit des von der LED emittierten Lichtes. Der in Fig. 7 dargestellte Filter erfüllt also die beiden Kriterien: Hohe Transmission im Bereich der LED-Wellenlängen, niedrige Transmission im übrigen Bereich, insbesondere in Bereichen, bei denen die Glaskeramik einen hohen Transmissionsgrad aufweist.

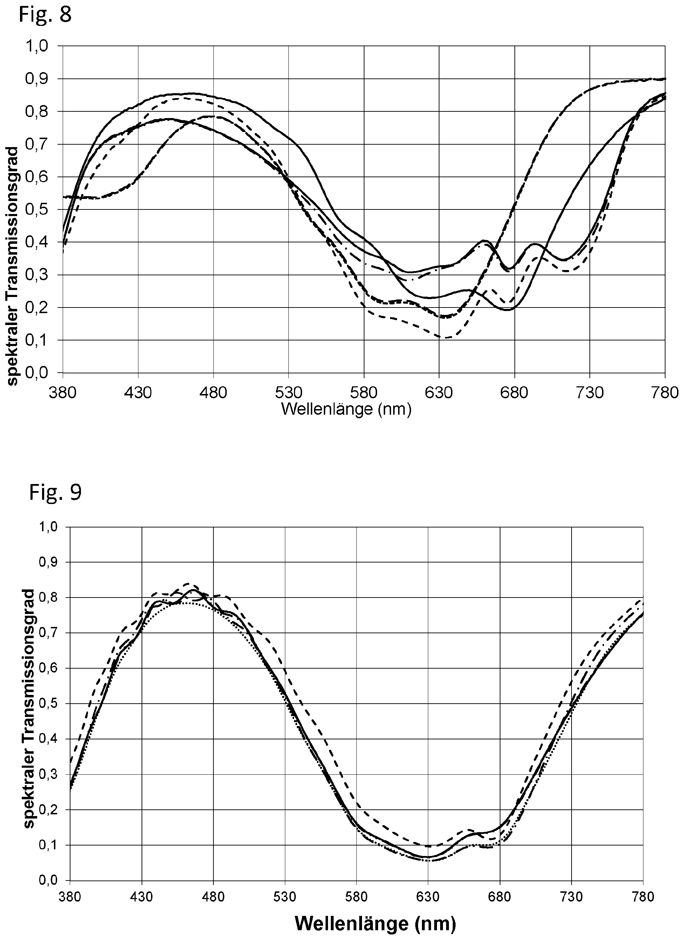

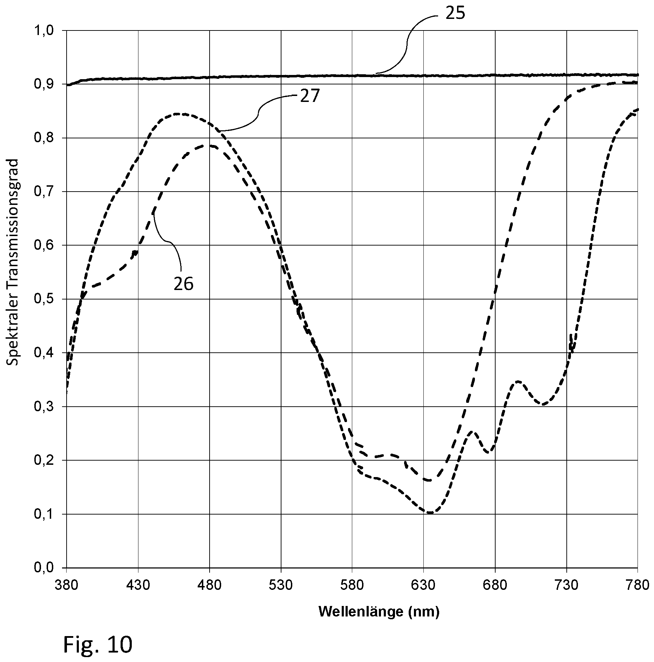

In Fig. 8 sind die spektralen Transmissionsverläufe verschiedener Transmissionsfilter abgebildet, wobei die Transmissionsfilter als volumengefärbten Folie ausgebildet sind. Bei den in Fig. 9 gezeigten Transmissionsverläufen handelt es sich dagegen um Transmissionsverläufe von Transmissionsfiltern, welche als farbige Beschichtung auf einer transparenten Kunststofffolie aufgebracht sind. Die in Fig. 10 gezeigten Transmissionsverläufe 26 und 27 sind Transmissionsfiltern zuzuordnen, welche als volumengefärbte Folie auf einem Trägerglas aufgebracht sind. Das Transmissionsspektrum 25 ist hierbei dem Trägerglas ohne Farbfolie zuzuordnen.

Ein Farbfilter mit einem Transmissionsverlauf gemäß 26 lässt sich ebenfalls auf einfache Weise mittels Sputtern realisieren. Ein solcher gesputterter Filter kann aus einer Abfolge dünner Schichten mit unterschiedlichen optischen Eigenschaften und Schichtdicken gebildet werden. Beispielsweise lässt sich ein solcher Transmissionsverlauf mit einer Abfolge von 5-50 nm Silber, 300 - 500 nm $SiO_2$, 5-50 nm Silber und 300 - 500 nm $SiO_2$ einstellen. Dabei wird vorzugsweise zuerst eine Silberschicht und zuletzt eine $SiO_2$-Schicht aufgetragen. Der Fachmann wird die jeweils benötigten Schichtdicken gemäß dem zu erzielenden Transmissionsverlauf einstellen. Solche Schichten können mittels Sputtern direkt auf die Glaskeramik aufgebracht werden. Sie können aber auch auf Kunststofffolien oder Platten aus Glas oder Glaskeramik, die dann als Träger für die Schicht dienen, aufgebracht werden.

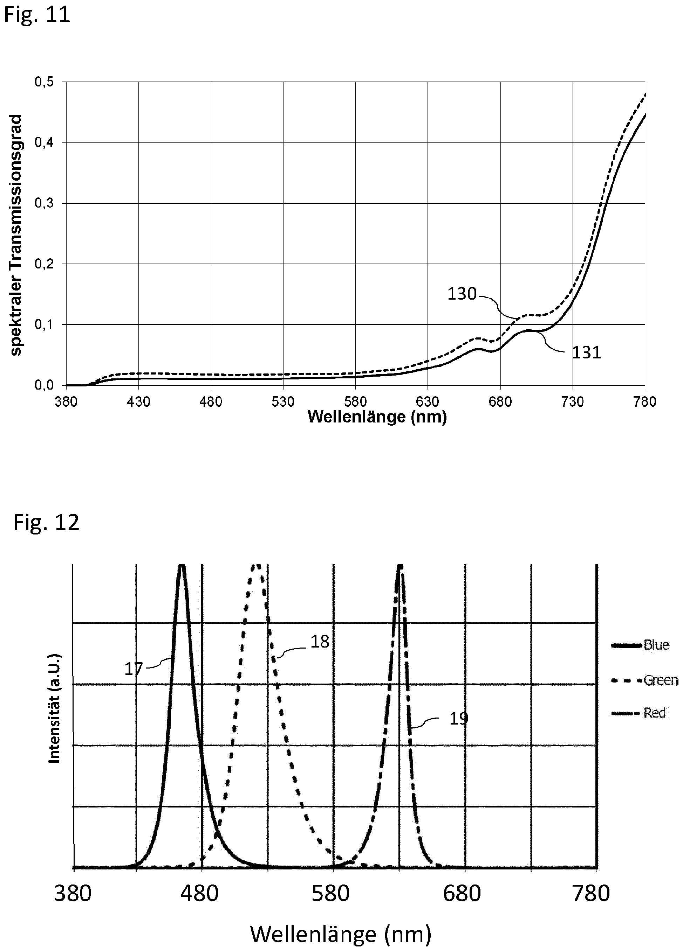

Die Fig. 11 zeigt die spektralen Transmissionsverläufe der Gesamttransmission von Glaskeramik und Filter an Hand zweier Ausführungsbeispiele 130 und 131. Hierbei handelt es sich bei dem Ausführungsbeispiel 130 um die Glaskeramik 14 mit einer beschichteten Folie als Filter, während beim Ausführungsbeispiel 131 die Glaskeramik 14 mit einer volumengefärbten Folie als Transmissionsfilter versehen ist.

Die Transmissionsfilter, deren spektrale Transmissionsverläufe in den Fig. 7 bis 10 gezeigt werden, werden gemäß einer Variante der erfindungsgemäßen Abdeckplatte in Kombination mit zumindest einer schmalbandigen Leuchtquelle betrieben. In Fig. 12 sind die Emissionsspektren verschiedener geeigneter Leuchtquellen 17, 18, und 19 dargestellt. Bezugszeichen 17 stellt hierbei das Emissionsspektrum einer blauen LED des Typs LED Cree Xlamp XQ-E High Density Royal Blue mit einer dominanten Wellenlänge von 450 nm dar. Bezugszeichen 18 stellt hierbei das Emisionsspektrum einer grünen LED des Typs LED Cree Xlamp XQ-E High Density Green mit einer dominanten Wellenlänge von 520 nm dar. Bezugszeichen 19 stellt hierbei das Emisionsspektrum einer roten LED des Typs LED Cree Xlamp XQ-E High Density Red mit einer dominanten Wellenlänge von 630 nm dar.

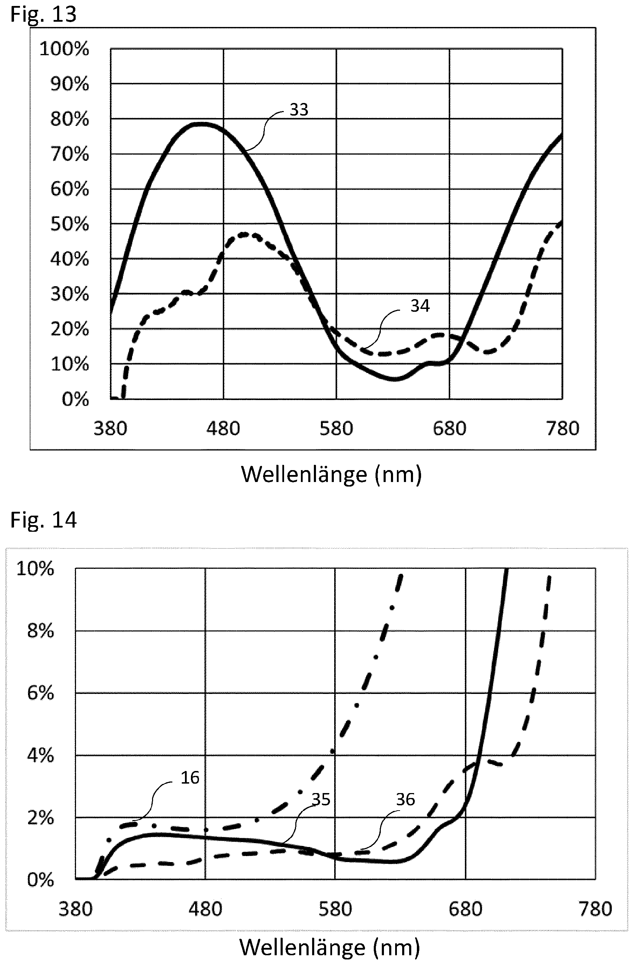

In Fig. 13 werden die Transmissionsspektren 33, 34 zweier Bandpassfilter, welche gemäß einer Variante der Abdeckvorrichtung zur Verwendung mit der in Fig. 12 gezeigten LED 17 geeignet sind. Fig. 14 zeigt die gemeinsamen Transmissionsspektren 35, 36 der in Fig. 13 gezeigten Filter 33, 34 und einer Glaskeramik des Typs CERAN HIGHTRANS® rubio 16. Transmissionsspektrum 16 entspricht dem Transmissionsspektrum der entsprechenden Glaskeramik ohne Filter.

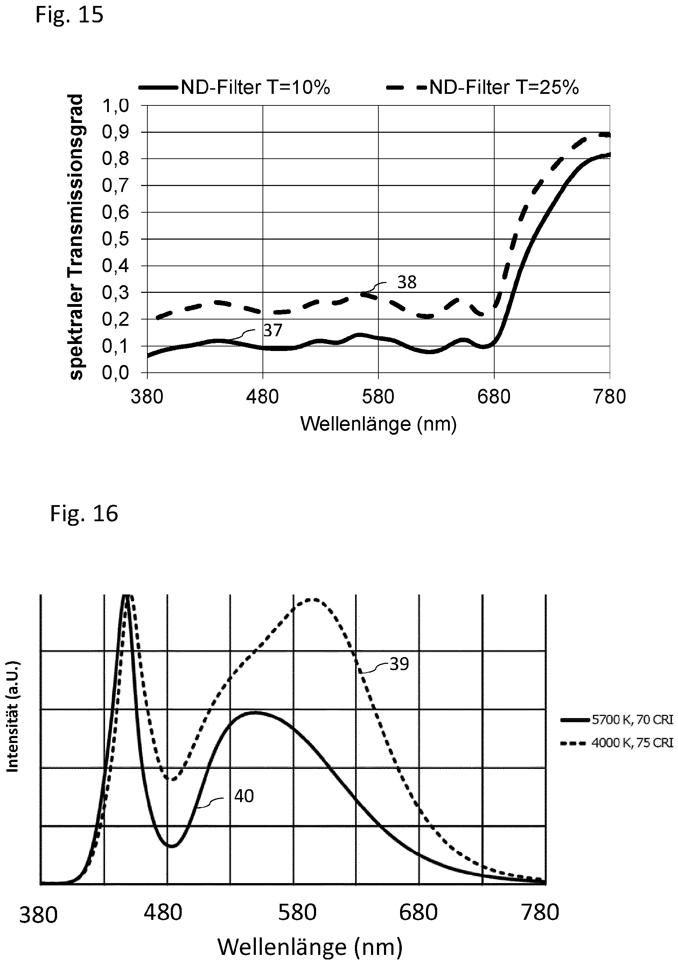

Fig. 15 zeigt die Transmissionsspektren geeigneter Neutraldichtefilter 37 und 38. Hierbei handelt es sich bei dem Neutraldichtefilter 37 um den Filter Lee 211 des Herstellers Lee und bei dem Neutraldichtefilter 38 um den Filter Lee 210 des Herstellers Lee. Durch die Neutraldichtefilter 37, 38 wird die Transmission im gesamten sichtbaren Spektralbereich abgesenkt, wobei der spektrale Transmissionsgrad der Filter 37, 38 im Bereich von 380 nm bis 680 nm relativ konstant ist. Dies führt zu einer weitgehend farbneutralen Abdunklung durch den jeweiligen Transmissionsfilter. Gemäß einer bevorzugten Ausführungsform der Erfindung werden die in Fig. 15 gezeigten Filter mit den in Fig. 16 dargestellten weißen LEDs 39 und 40 verwendet. Bei der LED 39 handelt es sich um eine LED des Typs *Cree XQ-E High Density Neutral White* und bei der LED 40 um eine LED des Typs *Cree XQ-E High Density Cool White*. Gemäß einer bevorzugten Ausführungsform der Erfindung werden die in den Fig. 15 und 16 gezeigten Transmissionsfilter und Leuchtquellen in einer Abdeckvorrichtung mit einer farbneutralen Glaskeramik als Abdeckplatte verwendet. Eine entsprechende farbeneutrale Glaskeramik weist hierbei bevorzugt folgende Zusammensetzung auf (Bestandteile in Gew.-% auf Oxidbasis) auf:

| | |
|---|---|
| $Li_2O$ | 2-5,5 |
| $\Sigma$ $Na_2O+K_2O$ | 0,1 - <4 |
| MgO | 0 - 3 |
| $\Sigma$ CaO+SrO+BaO | 0 - 5 |
| ZnO | 0 - 4 |
| $B_2O_3$ | 0 - 3 |
| $Al_2O_3$ | 16 - 26 |
| $SiO_2$ | 58 - 72 |
| $TiO_2$ | 1,5 - 5,5 |

(fortgesetzt)

| | |
|---|---|
| $ZrO_2$ | 0 -2,5 |
| $P_2O_5$ | 0 - 5 |
| $SnO_2$ | 0,1 - < 0,7 |
| $\Sigma\ TiO_2+ZrO_2+SnO_2$ | 3 - 6,5 |
| $V_2O_5$ | 0 - 0,02 |
| $Fe_2O_3$ | 0,005 - 0, 25 |
| $MoO_3$ | 0,003 - 0,5 |

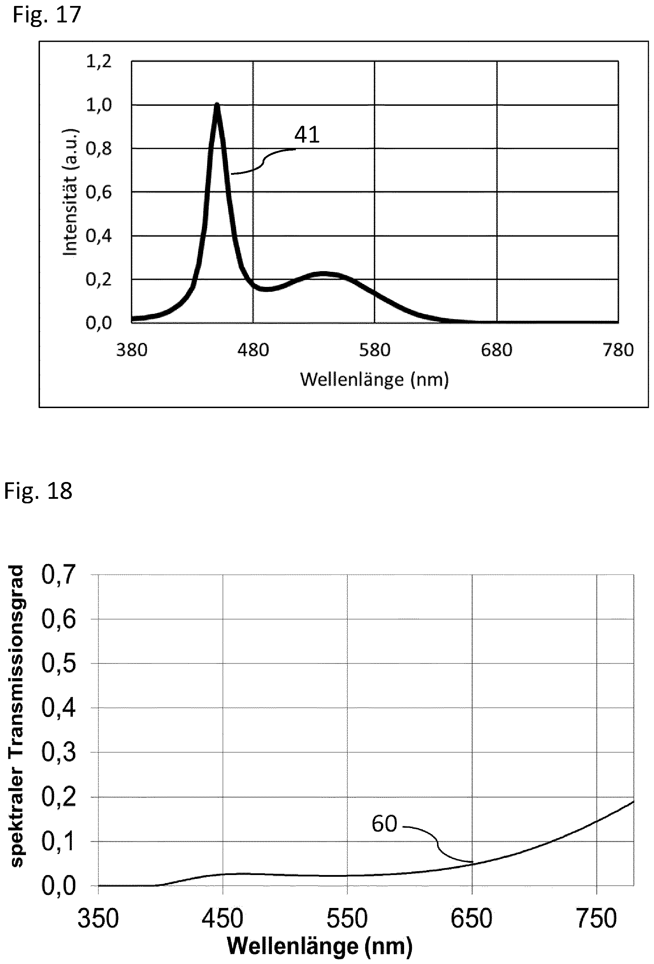

Eine andere Ausführungsform sieht vor, die in Fig. 15 gezeigten Neutraldichtefilter in einer Abdeckvorrichtung zu verwenden, welche eine vanadiumhaltige Glaskeramik und eine Leuchtquelle mit dem in Fig. 17 dargestellten Emissionsspektrum 41 aufweist. Bei der Leuchtquelle mit dem in Fig. 17 dargestellten Emissionsspektrum 41 handelt es sich um eine LED, welche dem Betrachter türkis erscheint. Die entsprechende LED ist hierbei eine blaue LED mit einer dominanten Wellenlänge von 450 nm, welche zusätzlich einen Phosphor zur partiellen Konversion des blauen Lichtes aufweist. Durch die Überlagerung des blauen Lichts der LED mit dem durch den Phosphor konvertierten Lichts entsteht ein türkiser Farbeindruck.

Die Transmissionsspektren der in dieser Ausführungsform als Abdeckplatte verwendeten Glaskeramiken sind in Fig. 6 dargestellt. Da die Glaskeramiken 14 bis 16 für Licht im Bereich ab 500 nm einen höheren Transmissionsgrad aufweisen als für Licht im kurzwelligeren Bereich, erfährt das Licht einer weißen Lichtquelle beim Durchtritt durch die Glaskeramik eine Farbverschiebung und erscheint einem Betrachter orange. Eine türkise LED mit einem Emissionsspektrum 41 gleicht diese Inhomogenität im Transmissionsspektrum der Glaskeramiken 14 bis 16 durch einen erhöhten Anteil im Blaubereich (450 nm) im Emissionsspektrum aus, so dass das emittierte Licht nach Durchtritt durch die Glaskeramik 14 bis 16 für den Betrachter weiß erscheint. Zusammen mit dem in Fig. 15 dargestellten Neutraldichtefiltern kann somit eine Abdeckvorrichtung mit einer weißen Anzeige und einem guten Dead-Front-Effekt erhalten werden. In diesem Fall bewirkt der Neutraldichtefilter keinen oder allenfalls eine sehr geringe Verschiebung des durch den Betrachter wahrgenommenen weißen Farborts.

Die hohe Relevanz der Abstimmung von Glaskeramik, Lichtquelle und Transmissionsfilter wird nachfolgend auch anhand der Tabelle 1 deutlich. Tabelle 1 fast die Ausführungsbeispiele 1 bis 3 sowie drei Vergleichsbeispiele zusammen:

Tabelle 1: Ausführungsbeispiele 1 bis 3 sowie Vergleichsbeispiele V1 bis V3

| Bsp. | 1 | 2 | 3 | V1 | V2 | V3 |
|---|---|---|---|---|---|---|
| Glaskeramik | 16 | 15 | 60 | 16 | 15 | 15 |
| Lichttransmissionsgrad der Glaskeramik bei 4 mm Dicke | 4,3% | 4,6% | 2,6% | 4,3% | 4,6% | 4,6% |
| Filter | 27 Farbfilter | 38 Neutraldichtefilter | 27 Farbfilter | 27 Farbfilter | 27 Farbfilter | Fig. 7 Farbfilter |
| Lichttransmissionsgrad der Glaskeramik bei 4 mm Dicke zusammen mit Filter | 1,7% | 2,8% | 1,2% | 1,7% | 1,7% | 1,1% |
| Leuchtmittel | opto device 7-Segmentanzei ge OS39DOBWA (blau) | opto devices LED TV-0603-WT2AA-A-CO, Farb-bin D (türkis) | opto device 7-Segmentanzei ge OS39DOBWA (blau) | opto device 7-Segmentanzei ge OS39D3BW WA (weiß) | opto device 7-Segmentanzei ge OS39D3BW WA (weiß) | opto device 7-Segmentanzei ge OS39D3BW WA (weiß) |
| Farbort Leuchtmittel (x/y) | 0,1248/0,0846 | 0,1960/0,3351 | 0,1248/0,0846 | 0,2914/0,3233 | 0,2914/0,3233 | 0,2914/0,3233 |
| Farbort Leuchtmittel durch Glaskeramik (x/y) | 0,1299/0,0926 | 0,2524/0,3316 | 0,1252/0,0800 | 0,4285/0,3748 | 0,4175/0,3307 | 0,4175/0,3307 |
| Farbort Leuchtmittel durch Glaskeramik und Filter (x/y) | 0,1241/0,0873 | 0,2560/0,3421 | 0,1236/0,0783 | 0,3062/0,3286 | 0,2888/0,2692 | 0,3237/0,3312 |
| $((x1-x2)^2-(y1-y2)^2)^{1/2}$ | 0,008 | 0,011 | 0,002 | 0,131 | 0,143 | 0,094 |

Die Abdeckvorrichtungen der Beispiele 1 und 2 weisen Glaskeramiken 15 und 16 auf, deren Transmissionsverläufe in Fig. 6 dargestellt sind. Der Transmissionsverlauf der Glaskeramik 60 ist in Fig. 18 dargestellt. An Hand der Tabelle 1 wird ersichtlich, dass nur bei Auswahl der jeweils passenden Komponenten Glaskeramik, Transmissionsfilter und Lichtquelle eine Abdeckvorrichtung mit einer geringen Farbverschiebung erhalten werden kann. So weisen die Ausführungsbeispiele 1 bis 3 alle sehr kleine Werte für die Beziehung

$$\sqrt{(x_1-x_2)^2 + (y_1-y_2)^2}$$

als Maß für die Beeinflussung des Farbortes durch das erste Mittel zur Reduktion der Lichttransmission auf. In den Vergleichsbeispielen V1 bis V3 wird dagegen eine vanadiumgefärbte Glaskeramik mit einem Farbfilter als Transmissionsfalter sowie einer weißen LED kombiniert. Hierdurch erfolgt eine signifikante Verschiebung des Farbortes, der Dead-Front-Effekt weist in den Vergleichsbeispielen V1 bis V3 somit keine bzw. nur eine sehr geringe Farbtreue auf.

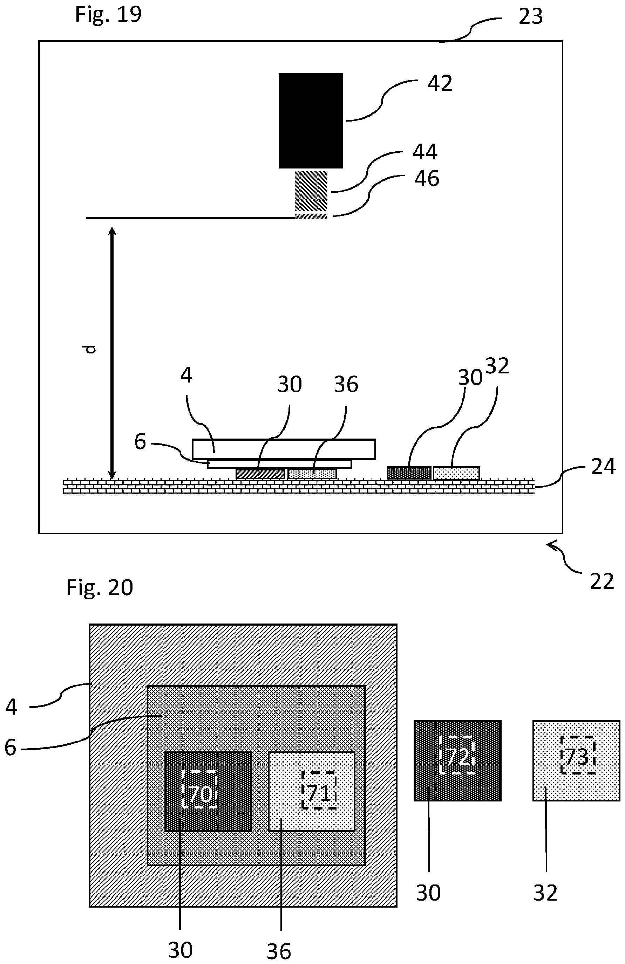

Die Fig. 19 und 20 zeigen eine Grauwertmesseinrichtung 22 zur Bestimmung prozentualer Grauwerte, insbesondere um Graustufenunterschiede zwischen verschiedenen Bereichen bestimmen zu können. Über die prozentualen Grauwerte kann hierbei der Dead-Front-Effekt quantifiziert werden. Der Messaufbau befindet sich in einer Dunkelkammer 23, um Fremdlicht ausschließen zu können.

In der Dunkelkammer 23 befindet sich auf einer Auflage 24 die Abdeckplatte mit dem auf der betrieblichen Rückseite des Glaskeramikplatte 4 angeordneten ersten Mittel zur Reduktion des Lichttransmissionsgrades, dem Transmissionsfilter 6.

Ferner sind zwei RAL-Karten 30, 32 in der Dunkelkammer 23 platziert, die nicht von der Glaskeramik oder dem Transmissionsfilter verdeckt werden. Die RAL-Karte 30 hat die RAL-Farbe 9017 (verkehrsschwarz) und die RAL-Karte 32 hat die RAL-Farbe 7012 (basaltgrau). Zusätzlich sind zwei weitere RAL-Karten 30, 36 in der Dunkelkammer platziert, die aus Sicht der Kamera hinter der Glaskeramik 4 und dem Transmissionsfilter 6 angeordnet sind. Die RAL-Karte 30 hat wiederrum die RAL-Farbe 9017 (verkehrsschwarz) und die RAL-Karte 36 hat die RAL-Farbe 9003 (signalweiß).

In einem Abstand d, welcher beispielsweise 606 Millimeter beträgt, ist eine Kamera 42 mit einem Objektiv 44 angeordnet. Optional kann vor dem Objektiv ein Filter 46 angebracht sein. Im vorliegenden Fall wurde jedoch kein Filter 46 verwendet.

Bei der verwendeten Messvorrichtung kommen folgende Komponenten zum Einsatz:
Die Kamera 42 ist ausgebildet als eine acA1920 - 40$\mu$m / Graustufenkamera der Basler AG und das Objektiv 44 ist ausgebildet als LM35HC Megapixel der Kowa GmbH. Die Kamera ist über die üblichen Mittel so einzustellen, dass das Bild weder überbelichtete noch unterbelichtete Bereiche enthält. Dafür können beispielsweise Belichtungszeit, Blendenöffnung, Verstärkungsfaktor oder ISO-Empfindlichkeit passend gewählt werden.

In der Dunkelkammer 23 befinden sich zudem LED-Spots der OSRAM Licht AG mit Farbtemperatur 4000K, EAN: 4052899944282 (nicht eingezeichnet). Die LED-Spots sind so eingestellt, dass auf dem Glas- oder Glaskeramiksubstrat 4 eine Helligkeit von 1200 Lux herrscht. Hiermit wird eine Beleuchtungssituation erzielt, die für Arbeitsbereiche wie Kochfelder typisch ist. Hinzuweisen ist darauf, dass die mittels der Grauwertmesseinrichtung bestimmten Messwerte von der Helligkeit im Wesentlichen unabhängig sind, so dass auch eine andere Beleuchtung vorgesehen sein kann.

Für die Messung wird das Beleuchtungssystem eingeschaltet und die Dunkelkammer geschlossen. Mit der Kamera 42 wird ein Graustufenbild der Situation aufgenommen. Mit anderen Worten wird mittels der Grauwertmesseinrichtung 22 ein Graustufenbild erzeugt, welches zumindest folgendes abbildet: Die RAL-Karten 30 (RAL 9017) und 36 (RAL 9003) durch den Transmissionsfilter 6 und das Glaskeramiksubstrat 4 hindurch betrachtet, sowie die RAL-Karte 30 (RAL 9017) und die RAL-Karte 32 (RAL 7012).

Basierend auf dem erzeugten Graustufenbild stellt die Grauwertmesseinrichtung 23 einen Messwert $M_1$ bereit, welcher der RAL-Karte 30 (RAL 9017) durch den Transmissionsfilter 6 und durch das Glaskeramiksubstrat 4 hindurch betrachtet entspricht.

Ferner stellt die Grauwertmesseinrichtung 22 einen Messwert $M_2$ bereit, welcher der RAL-Karte 36 (RAL 9003) durch den Transmissionsfilter 6 und durch das Glaskeramiksubstrat 4 hindurch betrachtet entspricht.

Darüber hinaus stellt die Grauwertmesseinrichtung 22 zwei weitere Messwerte bereit, welche den RAL-Karten 30 bzw. 32, die weder von der Glaskeramik 4 noch dem Transmissionsfilter 6 verdeckt werden, entsprechen.

Bei der verwendeten Grauwertmesseinrichtung wird das Graustufenbild mit Hilfe der Bildauswertungssoftware Halcon SDK Industry 12 der MVTec Software GmbH ausgewertet. Es hat sich gezeigt, dass die Messung unabhängig von den Belichtungsbedingungen und der Helligkeit der Beleuchtung ist, vorausgesetzt das Bild ist nicht unter- oder überbelichtet. Über eine Auswerteroutine in der Software können auf dem Bild verteilt diverse Messfenster, insbesondere die in Fig. 20 gezeigten Messfenster 70, 71, 72, 73 auf ihre Graustufen hin ausgewertet werden. In jedem Messfenster kann der Mittelwert der Grauwerte aller Pixel über die Messfläche inklusive der Standardabweichung gemessen und festgehalten werden. Mit anderen Worten können die Messwerte $M_1$, $M_2$ und die Messwerte der unbedeckten RAL-Karten als Mittelwerte über Messbereiche gebildet sein, wobei die Messbereiche jeweils mindestens eine Fläche von 0,2 cm$^2$, vorzugsweise 0,9 cm$^2$ aufweisen.

Basierend auf den gemessenen Messwerten $M_1$, $M_2$ und den Messwerten der beiden unbedeckten RAL-Karten, welche jeweils absolute Werte darstellen, werden prozentuale Grauwerte $G_1$ und $G_2$ berechnet. Mit anderen Worten, werden relative Kontraste in Prozent berechnet, um Messungen vergleichbar zu machen.

Dazu wird eine lineare Funktion G dadurch definiert, dass diese lineare Funktion dem Messwert, welcher der unbedeckten RAL-Karte 30 mit RAL-Farbe 9017 entspricht, einen prozentualen Grauwert von 20 % zuordnet und dem Messwert, welcher der unbedeckten RAL-Karte 32 mit RAL-Farbe 7012 entspricht prozentualen Grauwert von 90 % zuordnet. Mit anderen Worten werden die Messwerte der unbedeckten RAL-Karten 9017 als 20% und 7012 als 90% referenziert, worüber eine lineare Umrechnung für alle gemessene Grauwerte definiert wird.

Mit der linearen Funktion G=G(M), welche absolute Messwerte in prozentuale Grauwerte umrechnet, werden die prozentualen Grauwerte $G_1$ und $G_2$ berechnet als $Gi=G(Mi)$ und $G_2=G(M_2)$.

Optional können in der Dunkelkammer auch zusätzlich weitere RAL-Karten vorgesehen sein, beispielsweise mit RAL-Farbe 9003 (signalweiss), RAL-Farbe 9006 (weissaluminium) und/oder RAL-Farbe 7038 (achatgrau).

Bezugszeichenliste

| | |
|---|---|
| 1, 101, 102 | Abdeckvorrichtung |
| 2 | betriebliche Vorderseite |
| 3 | betriebliche Rückseite |
| 4 | Glaskeramik |
| 5 | Lichtquelle |
| 6, 61, 62, 63, 64 | Transmissionsfilter, bzw. Mittel zur Reduktion des Lichttransmissionsgrades |
| 7 | Unterseitenbeschichtung |
| 8 | emittiertes Licht |
| 9 | zweite Lichtquelle |
| 10 | emittiertes Licht der zweiten Lichtquelle |
| 11 | Trägersubstrat, Folie |
| 14, 15, 16, 60 | Glaskeramiken |
| 17, 18, 19 | Emissionsspektren schmalbandige Lichtquellen |
| 20, 21 | Emissionsspektren weiße LED |
| 22 | Grauwertmesseinrichtung |
| 23 | Dunkelkammer |
| 24 | Unterlage |
| 25 | Transmissionsspektrum Glas |
| 26, 27 | Transmissionsspektren beschichtetes Glas |
| 30, 32, 36 | RAL-Karten |
| 33, 34 | Transmissionsspektren verschiedener Bandfilder |
| 35, 36 | Transmissionsspektren von Glaskeramiken mit Transmissionsfiltern |
| 37, 38 | Transmissionspektren verschiedener Neutraldichtefilter |
| 39, 40 | Emissionsspektren verschiedener weißer LEDs |
| 41 | Emissionsspektrum einer türkisen LED als Ausführungsbeispiel |
| 42 | Kamera |
| 44 | Objektiv |
| 46 | Farbfilter |
| 50, 500 | Anzeigenbereich |
| 70, 71, 72, 73 | Messfenster |
| 130, 131 | Gesamttransmissionsspektren Filter und Glaskeramik |

**Patentansprüche**

1. Abdeckvorrichtung für ein Haushaltsgerät mit einer betrieblichen Vorderseite und einer betrieblichen Rückseite, umfassend zumindest ein Leuchtmittel,

   eine transparente, volumengefärbte Glaskeramik mit einem Lichttransmissionsgrad gemäß DIN EN 410 bezogen auf eine Dicke von 4 mm im Bereich von 0,5 % bis 70%,
wobei das Leuchtmittel auf der betrieblichen Rückseite der Abdeckvorrichtung angeordnet ist und
zwischen dem Leuchtmittel und der Glaskeramik ein erstes Mittel zur Reduktion des Lichttransmissionsgrades gemäß DIN EN 410 angeordnet ist,
wobei die volumengefärbte Glaskeramik und das erste Mittel zur Reduktion des Lichttransmissionsgrades zusammen einen Lichttransmissionsgrad DIN EN 410 im Bereich von 0,4% bis 15% aufweisen,
wobei das Transmissionsspektrum der Glaskeramik, das Transmissionsspektrum des ersten Mittels zur Reduktion des Lichttransmissionsgrades und das Emissionsspektrum des Leuchtmittels so aufeinander abgestimmt sind, dass
für x- und y-Farbkoordinaten des vom Leuchtmittel emittierten Lichtes im CIExy Y-Farbraum nach Durchtritt durch die volumengefärbte Glaskeramik $x_1$ und $y_1$ und die x- und y-Farbkoordinaten des vom Leuchtmittel emittierten Lichtes im CIExy Y-Farbraums nach Durchtritt durch die volumengefärbte Glaskeramik und das erste Mittel zur Reduktion des Lichttransmissionsgrades $x_2$ und $y_2$ gilt:

$$\sqrt{(x_1 \text{-} x_2)^2 + (y_1 \text{-} y_2)^2} < 0,05,$$

2. Abdeckvorrichtung gemäß dem vorstehenden Anspruch, wobei das Transmissionsspektrum der Glaskeramik, das Transmissionsspektrum des ersten Mittels zur Reduktion des Lichttransmissionsgrades und das Emissionsspektrum des Leuchtmittels so aufeinander abgestimmt sind, dass gilt:

$$\sqrt{(x_1 \text{-} x_2)^2 + (y_1 \text{-} y_2)^2}$$

$$< 0,04, \text{ bevorzugt} < 0,02, \text{ besonders bevorzugt} < 0,01.$$

3. Abdeckvorrichtung gemäß einem der vorstehenden Ansprüche, wobei die Glaskeramik einen Lichttransmissionsgrad im VIS-Bereich gemäß DIN 5033 im Bereich von 0,5 bis 3 %, bevorzugt 1 bis 2 % oder einen Lichttransmissionsgrad im VIS-Bereich gemäß DIN 5033 im Bereich von 2,5 bis 10 %, bevorzugt 3 bis 5% oder einen Lichttransmissionsgrad im VIS-Bereich gemäß DIN 5033 im Bereich von 15 bis 40 %, bevorzugt 20 bis 35% und besonders bevorzugt 23 bis 33% aufweist.

4. Abdeckvorrichtung gemäß einem der vorstehenden Ansprüche, wobei die Glaskeramik und das erste Mittel zur Reduktion des Lichttransmissionsgrades gemäß DIN EN 410 eine Differenz der beiden gemessenen prozentualen Grauwerte |G1-G2| <3%, bevorzugt <2% und besonders bevorzugt < 1% aufweisen.

5. Abdeckvorrichtung gemäß einem der vorstehenden Ansprüche 3 und 4, wobei die Glaskeramik einen $V_2O_5$-Gehalt im Bereich von 0,001 bis 0,04 Gew.-% aufweist.

6. Abdeckvorrichtung gemäß einem der vorstehenden Ansprüche, wobei das erste Mittel zur Reduktion des Lichttransmissionsgrades eine Beschichtung ist und die Beschichtung auf einem Träger, dem Leuchtmittel oder der Glaskeramik aufgebracht ist.

7. Abdeckvorrichtung gemäß einem der vorstehenden Ansprüche 1 bis 5, wobei das erste Mittel zur Reduktion des Lichttransmissionsgrades eine volumengefärbte Folie, bevorzugt eine volumengefärbte Kunststofffolie, oder eine volumengefärbte Platte, bevorzugt eine volumengefärbte Glas- oder Kunststoffplatte ist.

8. Abdeckvorrichtung gemäß einem der vorstehenden Ansprüche, wobei die Abdeckvorrichtung ein zweites Mittel zur Lichtreduktion aufweist, wobei das zweite Mittel auf der betrieblichen Rückseite angeordnet ist, das zweite Mittel zur Reduktion des Lichttransmissionsgrades gemäß DIN EN 410 und die Glaskeramik zusammen einen Lichttransmissionsgrad gemäß DIN EN 410 von höchstens 3,5%, bevorzugt von höchstens 0,5%, besonders bevorzugt von höchstens 0,05 % aufweist,
wobei das zweite Mittel zur Reduktion des Lichttransmissionsgrades gemäß DIN EN 410 zumindest eine Aussparung aufweist und das erste Mittel zur Reduktion des Lichttransmissionsgrades sowie das Leuchtmittel im Bereich dieser Aussparung angeordnet sind, so dass das vom Leuchtmittel emittierte Licht durch die Aussparung, das erste Mittel zur Reduktion des Lichttransmissionsgrades gemäß DIN EN 410 sowie die Glaskeramik hindurchtritt.

9. Abdeckvorrichtung gemäß dem vorstehenden Anspruch, wobei das zweite Mittel zur Reduktion des Lichttransmissionsgrades einen Lichttransmissionsgrad gemäß DIN EN 410 < 0,5%, bevorzugt < 0,05% und besonders bevorzugt < 0,005% aufweist.

10. Abdeckvorrichtung gemäß Anspruch 8, wobei das zweite Mittel zur Reduktion des Lichttransmissionsgrades eine Beschichtung, bevorzugt eine Sol-Gel-Beschichtung, eine Beschichtung enthaltend ein Polysiloxan, bevorzugt ein Silikonharz, eine keramische Beschichtung oder eine gesputterte Beschichtung ist.

11. Abdeckvorrichtung gemäß Anspruch 10, wobei die Beschichtung auf der Glaskeramik oder einem Träger, bevorzugt auf einer Folie oder Platte aufgebracht ist.

12. Abdeckvorrichtung gemäß Anspruch 8, wobei das zweite Mittel zur Reduktion der Lichttransmission eine volumengefärbte Platte oder Folie ist.

13. Abdeckvorrichtung gemäß einem der vorstehenden Ansprüche, wobei das Leuchtmittel eine schmalbandige Lichtquelle ist und das erste Mittel zur Reduktion des Lichttransmissionsgrad einen spektralen Transmissionsgrad von wenigstens 30%, bevorzugt wenigstens 50% und besonders bevorzugt wenigstens 70% für zumindest eine Wellenlänge des Spektralbereichs, in dem das Leuchtmittel emittiert und/oder einen spektralen Transmissionsgrad von weniger als 30%, bevorzugt weniger als 20% und besonders bevorzugt von weniger als 10% für wenigstens eine, bevorzugt für jede Wellenlänge im verbleibenden Spektralbereich des sichtbaren Lichts aufweist.

14. Abdeckvorrichtung gemäß Anspruch 13, wobei das erste Mittel zur Reduktion des Lichttransmissionsgrades und die Glaskeramik zusammen einen spektralen Transmissionsgrad mit einem Verlauf im Bereich von 500 bis 600 nm, bevorzugt von 450 bis 650 nm, besonders bevorzugt im Bereich von 400 bis 700 nm aufweisen, bei dem das Verhältnis des niedrigsten Wertes des spektralen Transmissionsgrades in diesem spektralen Bereich zum höchsten Wert des spektralen Transmissionsgrades in diesem spektralen Bereich höchstens 0,7, vorzugsweise höchstens 0,5 beträgt.

15. Abdeckvorrichtung gemäß einem der beiden vorstehenden Ansprüche, wobei das erste Mittel zur Reduktion des Lichttransmissionsgrades ein Bandpass-, Tiefpass- oder Hochpassfilter ist.

## Claims

1. A cover device for a household appliance, having an operational front side and an operational rear side, comprising at least one light source;

   a transparent volume-coloured glass ceramic exhibiting a light transmittance according to DIN EN 410 based on a thickness of 4 mm in the range from 0.5 % to 70 %;
   wherein the light source is arranged on the operational rear side of the cover device; and
   wherein a first means for reducing light transmittance according to DIN EN 410 is arranged between the light source and the glass ceramic;
   wherein the volume-coloured glass ceramic and the first means for reducing light transmittance together exhibit a DIN EN 410 light transmittance in the range from 0.4 % to 15 %;
   wherein the transmission spectrum of the glass ceramic, the transmission spectrum of the first means for reducing light transmittance and the emission spectrum of the light source are matched to one another such that the following applies for the x and y colour coordinates of the light emitted by the light source in the $CIE_{xy}$ Y colour space after passing through the volume-coloured glass ceramic, $x_1$ and $y_1$, and for the x and y colour coordinates of the light emitted by the light source in the $CIE_{xy}Y$ colour space after passing through the volume-coloured glass ceramic and the first means for reducing light transmittance, $x_2$ and $y_2$:

$$\sqrt{(x_1 - x_2)^2 + (y_1 - y_2)^2} < 0.05.$$

2. The cover device according to the preceding claim, wherein the transmission spectrum of the glass ceramic, the transmission spectrum of the first means for reducing light transmittance and the emission spectrum of the light source are matched to one another such that the following applies:

$$\sqrt{(x_1 - x_2)^2 + (y_1 - y_2)^2} < 0.04, \text{ preferably } < 0.02, \text{ most preferably } < 0.01.$$

3. The cover device according to any one of the preceding claims, wherein the glass ceramic exhibits a light transmittance in the VIS range according to DIN 5033 in the range from 0.5 to 3 %, preferably from 1 to 2 %; or a light transmittance in the VIS range according to DIN 5033 in the range from 2.5 to 10 %, preferably from 3 to 5 %; or a light transmittance in the VIS range according to DIN 5033 in the range from 15 to 40 %, preferably 20 to 35 % and most preferably from 23 to 33 %.

4. The cover device according to any one of the preceding claims, wherein the glass ceramic and the first means for reducing light transmittance according to DIN EN 410 have a difference between the two measured percentage grey values of |G1-G2| < 3 %, preferably < 2 % and most preferably < 1 %.

5. The cover device according to any one of the preceding claims 3 and 4, wherein the glass ceramic has a $V_2O_5$ content in the range from 0.001 to 0.04 wt%.

6. The cover device according to any one of the preceding claims, wherein the first means for reducing light transmittance is a coating and said coating is applied on a substrate or the light source or on the glass ceramic.

7. The cover device according to any one of the preceding claims 1 to 5, wherein the first means for reducing light transmittance is a volume-coloured film, preferably a volume-coloured plastic film, or a volume-coloured panel, preferably a volume-coloured glass panel or plastic panel.

8. The cover device according to any one of the preceding claims, wherein the cover device comprises a second means for light reduction, wherein the second means is arranged on the operational rear side, the second means for reducing light transmittance according to DIN EN 410 and the glass ceramic together exhibiting a light transmittance according to DIN EN 410 of at most 3.5 %, preferably at most 0.5 %, most preferably at most 0.05 %; wherein the second means for reducing light transmittance according to DIN EN 410 has at least one recess, and wherein the first means for reducing light transmittance as well as the light source are arranged within the range of this recess, so that the light emitted by the light source passes through the recess, the first means for reducing light transmittance according to DIN EN 410 and through the glass ceramic.

9. The cover device according to the preceding claim, wherein the second means for reducing light transmittance exhibits a light transmittance according to DIN EN 410 of < 0.5 %, preferably < 0.05% and most preferably < 0.005 %.

10. The cover device according to claim 8, wherein the second means for reducing light transmittance is a coating, preferably a sol-gel coating, a coating containing a polysiloxane, preferably a silicone resin, a ceramic coating, or a sputter-deposited coating.

11. The cover device according to claim 10, wherein the coating is applied on the glass ceramic or on a substrate, preferably on a film or panel.

12. The cover device according to claim 8, wherein the second means for reducing light transmittance is a volume-coloured panel or film.

13. The cover device according to any one of the preceding claims, wherein the light source is a narrow-band light source, and wherein the first means for reducing light transmittance exhibits a spectral transmittance of at least 30 %, preferably at least 50 % and most preferably at least 70 % for at least one wavelength of the spectral range in which the light source emits, and/or exhibits a spectral transmittance of less than 30 %, preferably less than 20 % and most preferably less than 10 % for at least one wavelength, preferably for all wavelengths in the remaining spectral range of visible light.

14. The cover device according to claim 13, wherein the first means for reducing light transmittance and the glass ceramic together exhibit a profile of spectral transmittance within the range from 500 to 600 nm, preferably from 450 to 650 nm, most preferably in the range from 400 to 700 nm, in which a ratio of the lowest value of spectral transmittance in this spectral range to the highest value of spectral transmittance in this spectral range is not more than 0.7, preferably not more than 0.5.

**15.** The cover device according to any one of the two preceding claims, wherein the first means for reducing light transmittance is a bandpass filter or low-pass filter or highpass filter.

## Revendications

**1.** Dispositif de recouvrement destiné à un appareil ménager doté d'une face avant de service et d'une face arrière de service, comprenant au moins un moyen d'éclairage, une vitrocéramique transparente teintée dans la masse, avec un taux de transmission lumineuse selon DIN EN 410, rapporté à une épaisseur de 4 mm, qui est compris dans la plage allant de 0,5 % à 70 %,

le moyen d'éclairage étant disposé sur la face arrière de service du dispositif de recouvrement, et
un premier moyen de réduction du taux de transmission lumineuse selon DIN EN 410 étant disposé entre le moyen d'éclairage et la vitrocéramique,
la vitrocéramique teintée dans la masse et le premier moyen de réduction du taux de transmission lumineuse présentant ensemble un taux de transmission lumineuse DIN EN 410 qui est compris dans la plage allant de 0,4 % à 15 %,
le spectre de transmission de la vitrocéramique, le spectre de transmission du premier moyen de réduction du taux de transmission lumineuse et le spectre d'émission du moyen d'éclairage étant adaptés les uns aux autres de manière à ce que
pour des coordonnées de couleur x et y de la lumière émise par le moyen d'éclairage, dans l'espace chromatique CIExyY, après le passage à travers la vitrocéramique teintée dans la masse, $x_1$ et $y_1$, et pour les coordonnées de couleur x et y de la lumière émise par le moyen d'éclairage, dans l'espace chromatique CIExyY, après le passage à travers la vitrocéramique teintée dans la masse et le premier moyen de réduction du taux de transmission lumineuse, $x_2$ et $y_2$, il est défini que :

$$\sqrt{(x_1 - x_2)^2 + (y_1 - y_2)^2} < 0{,}05,$$

**2.** Dispositif de recouvrement selon la revendication précédente, dans lequel le spectre de transmission de la vitrocéramique, le spectre de transmission du premier moyen de réduction du taux de transmission lumineuse et le spectre d'émission du moyen d'éclairage sont adaptés les uns aux autres de manière à ce que soit défini :

$$\sqrt{(x_1 - x_2)^2 + (y_1 - y_2)^2}$$

< 0,04, de préférence < 0.02, et de manière particulièrement avantageuse < 0,01.

**3.** Dispositif de recouvrement selon une des revendications précédentes, dans lequel la vitrocéramique présente un taux de transmission lumineuse, dans le domaine VIS selon DIN 5033, qui est compris dans la plage allant de 0,5 à 3 %, de préférence de 1 à 2 %, ou un taux de transmission lumineuse, dans le domaine VIS selon DIN 5033, qui est compris dans la plage allant de 2,5 à 10 %, de préférence de 3 à 5 %, ou un taux de transmission lumineuse, dans le domaine VIS selon DIN 5033, qui est compris dans la plage allant de 15 à 40 %, de préférence de 20 à 35 %, et de manière particulièrement avantageuse de 23 à 33 %.

**4.** Dispositif de recouvrement selon une des revendications précédentes, dans lequel la vitrocéramique et le premier moyen de réduction du taux de transmission lumineuse selon DIN EN 410 présentent une différence des deux valeurs de gris en pour cent mesurées [G1-G2] < 3 %, de préférence < 2 %, et de manière particulièrement avantageuse < 1 %.

**5.** Dispositif de recouvrement selon une des revendications précédentes 3 et 4, dans lequel la vitrocéramique présente une teneur en $V_2O_5$ comprise dans la plage allant de 0,001 à 0,04 % en poids.

**6.** Dispositif de recouvrement selon une des revendications précédentes, dans lequel le premier moyen de réduction du taux de transmission lumineuse est un revêtement, et le revêtement est appliqué sur un support, sur le moyen d'éclairage ou sur la vitrocéramique.

7. Dispositif de recouvrement selon une des revendications précédentes 1 à 5, dans lequel le premier moyen de réduction du taux de transmission lumineuse est un film teinté dans la masse, de préférence un film plastique teinté dans la masse, ou une plaque teintée dans la masse, de préférence une plaque en vitrocéramique ou en matière plastique teintée dans la masse.

8. Dispositif de recouvrement selon une des revendications précédentes, dans lequel le dispositif de recouvrement présente un deuxième moyen de réduction de lumière, le deuxième moyen étant disposé sur la face arrière de service, le deuxième moyen de réduction du taux de transmission lumineuse selon DIN EN 410 et la vitrocéramique présentant ensemble un taux de transmission lumineuse selon DIN EN 410 d'au maximum 3,5 %, de préférence d'au maximum 0,5 %, et de manière particulièrement avantageuse d'au maximum 0,05,
le deuxième moyen de réduction du taux de transmission lumineuse selon DIN EN 410 présentant au moins un évidement, et le premier moyen de réduction du taux de transmission lumineuse ainsi que le moyen d'éclairage étant disposés dans la région de cet évidement, de sorte que la lumière émise par le moyen d'éclairage traverse l'évidement, le premier moyen de réduction du taux de transmission lumineuse selon DIN EN 410 et la vitrocéramique.

9. Dispositif de recouvrement selon la revendication précédente, dans lequel le deuxième moyen de réduction du taux de transmission lumineuse présente un taux de transmission lumineuse selon DIN EN 410 < 0,5 %, de préférence < 0,05 %, et de manière particulièrement avantageuse < 0,005 %.

10. Dispositif de recouvrement selon la revendication 8, dans lequel le deuxième moyen de réduction du taux de transmission lumineuse est un revêtement, de préférence un revêtement sol-gel, un revêtement contenant un polysiloxane, de préférence une résine silicone, un revêtement céramique ou un revêtement obtenu par pulvérisation cathodique.

11. Dispositif de recouvrement selon la revendication 10, dans lequel le revêtement est appliqué sur la vitrocéramique ou un support, de préférence sur une feuille ou une plaque.

12. Dispositif de recouvrement selon la revendication 8, dans lequel le deuxième moyen de réduction de transmission lumineuse est une une plaque ou une feuille teintée dans la masse.

13. Dispositif de recouvrement selon une des revendications précédentes, dans lequel le moyen d'éclairage et une source de lumière à bande étroite, et le premier moyen de réduction du taux de transmission lumineuse présente un taux de transmission spectrale d'au moins 30 %, de préférence d'au moins 50 % et de manière particulièrement avantageuse d'au moins 70 % pour au moins une longueur d'onde du domaine spectral dans lequel émet le moyen d'éclairage, et/ou un taux de transmission spectrale de moins de 30 %, de préférence de moins de 20 % et de manière particulièrement avantageuse de moins de 10 % pour au moins une longueur d'onde, de préférence pour chaque longueur d'onde dans le domaine spectral restant de la lumière visible.

14. Dispositif de recouvrement selon la revendication 13, dans lequel le premier moyen de réduction du taux de transmission lumineuse et la vitrocéramique présentent ensemble un taux de transmission spectrale évoluant dans la plage allant de 500 à 600 nm, de préférence de 450 à 650 nm, de manière particulièrement avantageuse dans la plage allant de 400 à 700 nm, où le rapport entre la valeur la plus basse du taux de transmission spectrale dans ce domaine spectral et la valeur la plus haute du taux de transmission spectrale dans ce domaine spectral est au maximum de 0,7, de préférence au maximum de 0,5.

15. Dispositif de recouvrement selon l'une des deux revendications précédentes, dans lequel le premier moyen de réduction du taux de transmission lumineuse est un filtre passe-bande, passe-bas ou passe-haut.

Fig. 1

Fig. 2A

Fig. 2B

Fig. 3

Fig. 4

Fig. 5

Fig. 6

Fig. 7

Fig. 8

Fig. 9

Fig. 10

Fig. 11

Fig. 12

Fig. 13

Wellenlänge (nm)

Fig. 14

Wellenlänge (nm)

Fig. 15

Fig. 16

Fig. 17

Fig. 18

Fig. 19

23

42

44

46

d

4  30  36  30 32

6

24

22

Fig. 20

4

6

30  36

30

32

70  71

72  73

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008050263 A1
- WO 2012001300 A1
- DE 202010018044 U1
- DE 202012012718 U1
- EP 3339741 A1